# FASCICULE DE BREVET EUROPEEN

(11) **EP 2 872 595 B1**
(45) Date de publication et mention de la délivrance du brevet: **20.02.2019**
(21) Numéro de dépôt: 13740226.9
(22) Date de dépôt: 12.07.2013
(51) Int. Cl.: C09K 21/02, C08K 3/22

(54) **COMPOSITIONS POLYMERES IGNIFUGEES ET RESISTANTES AU FEU A BASE DE CHAUX**
FLAMMHEMMENDE UND FEUERBESTÄNDIGE POLYMERZUSAMMENSETZUNGEN AUS KALK
FLAME-RETARDANT AND FIRE-RESISTANT POLYMER COMPOSITIONS MADE FROM LIME

(30) Priorité: 12.07.2012 BE 201200484; 05.09.2012 US 201261696941 P
(43) Date de publication de la demande: 20.05.2015
(73) Titulaire: S.A. Lhoist Recherche et Développement, 1342 Ottignies-Louvain-la-Neuve (BE)
(72) Inventeur: LORGOUILLOUX, Marion, B-7110 Strépy Bracquegnies (BE); LESUEUR, Didier, B-1440 Braine-le-Château (BE); DUBOIS, Philippe, B-4260 Braives (BE); LAOUTID, Fouad, F-59130 Lambersart (FR); BONNAUD, Leïla, F-59300 Valenciennes (FR)
(74) Mandataire: Gevers Patents
(86) Numéro de dépôt international: PCT/EP2013/064790
(87) Numéro de publication internationale: WO 2014/009525

(56) Documents cités:
- DE-A1-102009 034 700
- US-A1- 2005 113 500
- US-A1- 2006 188 428

## Description

La présente invention se rapporte au domaine des charges minérales à ajouter à des polymères pour former des compositions polymères ignifugées. Plus particulièrement, la présente invention se rapporte à l'utilisation dans des compositions polymères ignifugées d'une charge minérale comprenant un composé calcique.

On connaît du document US2006/0188428 des charges issues de dolomie à ajouter dans des plastiques pour leur capacité antimicrobienne et de capture d'HCl lors de l'incinération des plastiques.

Les additifs retardateurs de flamme (*flame retardant* en anglais) ou additifs ignifuges ou encore ignifugeants sont incorporés dans des matrices polymères afin de ralentir ou stopper la combustion du polymère dans le cas d'un incendie.

On connaît par exemple du document DE102009034700 l'utilisation de composés dolomitiques comme retardateurs de flamme lorsqu'ils sont ajoutés à des compositions polymères.

On distingue entre autres deux catégories d'effets de ces additifs retardateurs de flamme (appelés charges dans la suite du texte), à savoir les effets chimiques et les effets physiques.

Parmi les effets chimiques, on trouve l'accélération de la rupture des chaînes du polymère sous l'effet de la température qui conduit à un polymère fondu qui va goutter et quitter la zone chaude de l'incendie. On trouve aussi, dans le cas des systèmes à base de retardateurs de flamme phosphorés, la formation d'une couche de charbonnement non cohésive par réaction entre la charge et le polymère ; cette couche sert ensuite de barrière et empêche le dégagement de gaz combustibles qui alimentent l'incendie. Egalement, on retrouve des charges qui, lors de la montée en température, libèrent des composés non inflammables ou qui piègent les radicaux libres présents dans la phase gazeuse. Certains de ces effets chimiques sont obtenus en utilisant des charges halogénées (bromures et chlorures) qui sont progressivement abandonnées pour des raisons toxicologiques et environnementales.

Parmi les effets physiques, on trouve la réaction de décomposition endothermique de la charge qui provoque le refroidissement du polymère et la libération de gaz inertes comme de la vapeur d'eau ou du CO₂ qui vont agir ensuite comme diluants des gaz comburants et combustibles. Enfin, on trouve également la formation d'une couche protectrice de faible cohésion issue de la dégradation de la charge, couche qui va à nouveau empêcher la libération de gaz combustibles. Ces effets physiques sont généralement obtenus avec des charges (fillers) minérales.

De manière générale, les compositions comprenant d'une part les charges minérales et d'autre part les polymères doivent présenter certaines caractéristiques pour être, en pratique, applicables. Tout d'abord, l'effet retardateur de flamme doit pouvoir être quantifié afin d'évaluer l'intérêt de telles compositions. La méthode normalisée du cône calorimètre (ISO 5660-1 ou ASTM E 1354) est utilisée pour déterminer le dégagement de chaleur (noté HRR pour Heat Rate Release et exprimé en kW/m²) d'une composition de polymère contenant éventuellement des charges minérales, lorsque celle-ci est exposée à un niveau contrôlé de chaleur rayonnante. Cette méthode, nommée ci-après « test au feu », permet en outre de déterminer l'inflammabilité, la perte de masse, la production de fumées ou encore la chaleur de combustion d'une composition. Pour un polymère chargé, une quantité peu élevée de chaleur traduit un bon effet retardateur de flamme des charges minérales.

Il existe d'autres méthodes pour évaluer l'effet retardateur de flamme telles que le LOI (Limiting Oxygen Index, selon la norme ASTM D 2863), l'essai dit de "l'épiradiateur" (NF P92-505) ou encore des méthodes, qui correspondent généralement à des applications précises des polymères chargés (câbles, appareillage électrique, accessoires électriques...) parmi lesquelles l'essai d'inflammation UL94, les diverses modalités de l'essai dit «du fil incandescent» (IEC 60695-2), le cône calorimètre adapté aux câbles (EN 50399)...

Par ailleurs, étant donné la proportion élevée de ces charges minérales dans les compositions, il est important d'évaluer l'impact que les charges minérales ont sur les propriétés mécaniques des compositions polymères. Dès lors, les polymères chargés devront présenter des caractéristiques de résistance mécanique (traction, impact) acceptables.

Pour nombre de matrices polymères, les propriétés mécaniques des compositions de polymère ignifugées par l'ajout de charges peuvent être améliorées par un traitement de surface desdites charges préalablement à leur incorporation dans la matrice polymère.

Les charges minérales les plus courantes à utiliser avec des polymères pour obtenir un effet retardateur de flamme sont principalement le trihydroxyde d'aluminium Al(OH)₃, également appelé ATH et le dihydroxyde de magnésium Mg(OH)₂, aussi appelé MDH.

Si ces deux hydroxydes ont un effet retardateur de flamme efficace du fait de leurs propriétés particulières qui conduisent aux effets physiques listés ci-dessus, ils n'ont en revanche aucun effet sur la cohésion du résidu de combustion. A l'issue de leur combustion, les compositions de polymère chargées avec de l'ATH ou du MDH se présentent sous la forme d'une cendre noire/grise (composée d'oxyde de magnésium ou d'aluminium et de restes de polymère carbonisé), non cohésive, qui se réduit en poussière sous la moindre contrainte mécanique.

Le dihydroxyde de calcium, Ca(OH)₂, souvent obtenu par hydratation (extinction) d'une chaux vive, se décompose de manière endothermique (consommation de 900 kJ/kg) autour de 400 °C en libérant de l'eau et en donnant lieu à la formation d'un oxyde, CaO. Ca(OH)₂ apparaît de ce fait comme un hydroxyde minéral présentant toutes les propriétés nécessaires pour pouvoir être utilisé en tant que charge retardatrice de flamme. Toutefois, la température de décomposition de Ca(OH)₂ est élevée en comparaison de celles de l'ATH et du MDH, et Ca(OH)₂ n'est donc efficace en tant que retardateur de flamme qu'à relativement haute température, le risque étant qu'à cette température, le polymère soit déjà totalement dégradé. Par ailleurs, du fait de sa forte basicité (pH de l'ordre de 12,5), Ca(OH)₂ peut être utilisé en tant que charge uniquement dans des matrices polymères dont les propriétés ne sont pas dégradées au contact de particules de pH élevé.

Ca(OH)₂ est de ce fait moins courant que l'ATH et le MDH.

Le document US2005/0113500 décrit par exemple l'utilisation de trihydroxyde d'aluminium, d'hydroxyde de magnésium et de dihydroxyde de calcium comme additif retardateur de flamme. Ce document se focalise sur l'ajout de particules fines qui pourrait améliorer l'effet retardateur de flamme et faciliter l'incorporation et la consommation de la charge minérale dans le polymère.

La caractérisation des résidus de combustion obtenus après calcination des compositions polymères chargées, appelés dans certains cas résidus charbonneux, permettra d'évaluer l'utilité de certaines charges dans les compositions polymère en vue de certaines applications.

L'état du résidu de combustion des compositions polymères a été beaucoup étudié dans les dernières années. Il est en effet avantageux d'avoir des compositions polymères qui, en plus d'être retardatrices de flamme, conservent leur forme pendant l'incendie. En particulier, dans le domaine des gaines de câbles électriques en polymères, il est préférable que, pendant le déroulement d'un incendie, la gaine de câble reste autour du câble conducteur afin de continuer d'en assurer le fonctionnement et afin d'éviter des courts-circuits.

Il n'existe pas à l'heure actuelle de définition standard de la cohésion des résidus de combustion issus de compositions polymères. Au sens de l'invention, on entend par « résidu cohésif » un résidu de combustion qui n'est pas une cendre, ni une poussière, ni une poudre, mais bien un solide cohésif présentant une certaine unité (par opposition à un solide divisé). Ce résidu a globalement la même 'forme' et occupe la même place que la composition polymère initiale dont il est issu. En particulier, ce résidu peut être poreux et assimilé de ce fait à un résidu intumescent. Lorsqu'un tel résidu est obtenu, on parle d'effet de résistance au feu ('fire resistant' en anglais), parfois appelé effet céramisant. Comme mentionné ci-après, ce résidu cohésif est un résidu qui, après combustion selon la méthode normalisée du cône calorimètre ISO 5660-1 ou ASTM E 1354, n'est traversé que par un nombre de fissures très limité, inférieur ou égal à 3, de préférence inférieur ou égal à 2, voire à 1 et de manière particulièrement préférentielle nul.

De manière avantageuse, ce résidu peut, en plus de sa cohésion, avoir une certaine résistance mécanique en compression, appelée plus simplement dans la suite « résistance mécanique ».

A l'heure actuelle, il semble que la combinaison d'un effet retardateur de flamme et d'un effet résistant au feu menant à la formation d'un résidu cohésif, bien que très recherchée et appréciée, ne soit obtenue qu'en présence de formulations complexes contenant de l'ATH ou du MDH en tant que charge retardatrice de flamme, associée avec des nanoparticules (argiles, nanotubes de carbone, silice ...), du borate de zinc ... en tant qu'agent résistant au feu ou céramisant. Ces agents céramisants sont couteux, difficiles à incorporer au polymère et présentent pour nombre d'entre eux un profil écotoxique défavorable qui en limite l'usage et rend nécessaire la recherche de substituts.

Des charges minérales calciques ont déjà été décrites dans l'art antérieur. Par exemple, le document d'Ashley et coll. publié dans « Plastic, Rubber and Composites Processing and Application, vol 15, n°1, 1991 » divulgue une étude comparative de diverses charges minérales dans un acétate d'éthylène vinylique (EVA) qui est le polymère généralement de référence. Ce document divulgue que l'hydroxyde de calcium est potentiellement intéressant de par sa décomposition endothermique, mais qu'il présente toutefois un effet limité sur l'indice d'oxygène (LOI) de l'EVA. En revanche, une cendre dure ('strong ash' dans le texte en anglais) est formée lors de l'utilisation de Ca(OH)₂. Cette cendre a été analysée et est majoritairement composée de carbonate de calcium CaCO₃. La cendre dure obtenue à l'issue de la combustion est alors présumée être le résultat de la réaction entre l'hydroxyde de Ca et le CO₂ produit pendant la combustion.

Ces résultats, c'est-à-dire un effet retardateur de flamme limité (sur le LOI et sur le temps d'ignition) et la formation d'une cendre dure composée majoritairement de CaCO₃, ont été confirmés dans d'autres matrices polymères. Cependant, la réaction de carbonatation de Ca(OH)₂ en CaCO₃ étant exothermique, les auteurs concluent qu'il n'est pas pertinent d'utiliser Ca(OH)₂ en tant que retardateur de flamme.

Le document de Focke et coll. publié dans « Journal of Chemical Engineering, vol 9, n°2, 1997 » évalue quant à lui différentes charges minérales en tant que retardateur de flamme. Plusieurs composés sont comparés, notamment un hydroxyde d'aluminium, de l'acide borique, un hydroxyde de calcium, un sulfate de calcium, de la colemanite (borate de calcium), un hydroxyde de magnésium, un borate de zinc et un composé appelé UltraCarb qui est un mélange d'huntite (de formule CaMg₃(CO₃)₄) et d'hydromagnésite (de formule Mg₅(CO₃)₄(OH)₂.4H₂O) finement divisé.

Trois paramètres sont étudiés pour chacune de ces charges : le refroidissement du substrat (effet endothermique de la décomposition de la charge), la dilution des gaz de combustion par des gaz inertes (libération d'eau et/ou de CO₂ par la charge) et la formation d'une couche de charbonnement ('char' en anglais, 'ash-char barrier layer' en particulier dans ce document).

Certaines charges qui sont très efficaces pour le refroidissement et la dilution des gaz s'avèrent en revanche défavorables à la formation de la couche de charbonnement. En effet, les oxydes formés lors de la décomposition des hydroxydes catalysent l'oxydation de la couche de charbonnement, conduisant à un charbonnement moindre pour les polymères chargés que pour les polymères non chargés et limitant ainsi l'effet barrière, qui améliore pourtant le caractère retardateur de flamme des compositions.

Parmi les hydroxydes donnant lieu à ce phénomène, l'hydroxyde de Ca est celui qui conduit au meilleur charbonnement, non pas que l'oxydation soit moindre, mais du fait de la formation de CaCO₃ par réaction du CaO formé lors de la décomposition avec le CO₂ formé pendant la combustion du polymère. Dans la liste des charges testées, seul l'acide borique ne catalyse pas l'oxydation de la couche de charbonnement et conduit à la formation d'un charbonnement cohésif et d'un résidu vitreux. Toutes les autres charges conduisent à la formation de résidus pulvérulents.

CaCO₃ étant considéré comme un catalyseur de la dégradation exothermique de polyoléfines, la carbonatation de CaO lors de l'utilisation de Ca(OH)₂ comme charge peut être vue comme étant une réaction favorisant la combustion. Les auteurs concluent que Ca(OH)₂ ne peut donc pas être utilisé en tant que retardateur de flamme.

Ces deux documents divulguent la formation de CaCO₃ au cours de la combustion de compositions polymères chargées avec Ca(OH)₂. A cause de cette carbonatation, ils déconseillent l'utilisation de Ca(OH)₂ en tant que charge retardatrice de flamme, d'une part parce que cette réaction de carbonatation est exothermique et d'autre part parce que CaCO₃ est considéré comme un catalyseur de la réaction de dégradation des polyoléfines. Dans les deux cas, les résidus de combustion obtenus en présence de Ca(OH)₂ ne sont pas cohésifs, mais pulvérulents, la définition même d'une cendre étant 'une poudre résultant de la combustion de certaines matières'.

Le document publié en 2011 dans Polymer Dégradation and Stability par Hamdani-Devarennes et coll. décrit très clairement et de manière détaillée l'intérêt d'avoir un résidu cohésif à l'issue de la combustion de compositions polymères, particulièrement dans le domaine des isolants de câbles électriques. Le système proposé par Hamdani-Devarennes et coll. pour la formation d'un tel résidu cohésif est une composition à base d'une matrice siliconée et de charges calciques. En effet, au cours de la dégradation du polymère à hautes températures, il y a une co-cristallisation en phase solide entre le CaO issu de la décomposition de la charge et la silice de la matrice conduisant à la formation de silicate de calcium, le plus souvent de wollastonite (CaSiO₃). De tels résidus ne peuvent bien entendu être obtenus que dans des matrices siliconées.

Cette co-cristallisation modifie la microstructure du résidu qui est alors plus dense, ce qui explique sa meilleure cohésion et en particulier sa meilleure résistance en compression en comparaison de résidus obtenus pour les mêmes matrices siliconées chargées avec des additifs à base d'aluminium, qui produisent systématiquement des résidus contenant de l'alumine (Al₂O₃) sans réaction avec la matrice siliconée.

Parmi les charges calciques, ce document privilégie les carbonates naturels ou synthétiques (PCC) par rapport aux hydroxydes de calcium. En effet, si Ca(OH)₂ se décompose à plus basse température que CaCO₃ et réagit du coup plus rapidement avec la silice de la matrice, Ca(OH)₂ libère en revanche de l'eau pendant sa décomposition ce qui conduit à la formation d'un résidu poreux dont la résistance mécanique est logiquement plus faible que celle d'un résidu dense.

La présente invention a donc pour but de proposer des charges minérales comprenant au moins un composé calcique à utiliser dans une composition polymère organique afin de bénéficier de ses notamment en termes d'endothermicité (effet retardateur de flamme) tout en permettant des caractéristiques mécaniques acceptables pour la composition polymère contenant la charge minérale et qui permet de surcroit de former un résidu de combustion cohésif (effet de résistance au feu), sans nécessiter le recours à des agents céramisants couteux et difficiles à incorporer.

A cette fin, il est prévu selon la présente invention l'utilisation, dans une composition polymère organique ignifuge, d'une charge minérale comprenant un composé calcique comprenant au moins de l'hydroxyde de calcium pour conférer à cette composition polymère organique ignifugée, simultanément à un effet retardateur de flamme, un effet de résistance au feu, par lequel un résidu de combustion de ladite composition polymère organique ignifugée est cohésif.

Il a en effet été confirmé qu'au cours de la décomposition de la matrice polymère, le CO₂ libéré dans l'atmosphère de la zone de combustion est capté par le Ca(OH)₂ présent initialement dans la charge de la composition selon l'invention. Cette captation conduit à la formation de carbonate de calcium de formule CaCO₃ comme l'indiquaient Ashley et coll. et Focke et coll. dans les documents cités précédemment. Néanmoins, de manière surprenante, les inconvénients précités de la formation de ce CaCO₃ pointés dans ces documents ont été infirmés pour les compositions selon l'invention. En effet, lors de l'étude par cône calorimétrie, la comparaison des résultats obtenus pour des compositions à base d'ATH ou de MDH d'une part et des compositions à base d'hydroxyde de calcium d'autre part permet de conclure à un bon effet retardateur de flamme de l'hydroxyde de calcium.

Outre le bon effet retardateur de flamme des compositions à base d'hydroxyde de calcium, l'utilisation d'hydroxyde de calcium dans une composition polymère organique ignifugée permet en outre d'obtenir un effet de résistance au feu où le résidu de combustion obtenu est cohésif. La formation de CaCO₃ pendant la combustion des compositions polymères organiques ignifugées contenant de l'hydroxyde de calcium permet l'obtention en fin de combustion d'un résidu cohésif qui ne s'effondre pas sous la forme de cendres contrairement au résidu obtenu en fin de combustion pour les compositions à base d'ATH ou de MDH.

Ce résidu de combustion cohésif et éventuellement intumescent à base de carbonate de calcium, obtenu lors de l'utilisation d'hydroxyde de calcium dans des compositions polymères organiques ignifugées au contraire des résidus de combustion non cohésifs obtenus avec l'ATH ou le MDH, est particulièrement efficace dans certaines applications, comme par exemple celles des pièces plastiques utilisées dans les domaines électriques ou électroniques (équipement électrique ou électronique, câbles électriques et/ou de communication...) en particulier celle des câbles électriques gainés où le résidu cohésif protégera les câbles électriques des dégâts du feu et des courts-circuits en permettant à la gaine du câble de continuer à jouer son rôle protecteur même à hautes températures.

La capture par l'hydroxyde de calcium du CO₂ contenu dans les gaz de combustion a un effet double. D'une part, elle conduit à la formation d'un résidu cohésif éventuellement intumescent tel que décrit précédemment. D'autre part, elle déplace l'équilibre de combustion vers la formation de CO₂ au détriment de CO, diminuant la toxicité des fumées. Ceci constitue un effet additionnel positif lié à la présence de Ca(OH)₂ dans la composition polymère ignifugée selon l'invention.

L'hydroxyde de calcium utilisé au sens de la présente invention est en particulier de la chaux hydratée également appelée chaux éteinte. Ce composé calcique est un composé généralement pulvérulent formant un ensemble de particules solides, principalement constituées d'hydroxyde de calcium Ca(OH)₂.

Cette chaux éteinte peut évidemment contenir des impuretés, à savoir des phases dérivées de SiO₂, Al₂O, Fe₂O₃, MnO, P₂O₅, K₂O et/ou SO₃ à hauteur de quelques dizaines de grammes par kilogramme. Néanmoins, la somme de ces impuretés, exprimées sous la forme des oxydes précités, ne dépasse pas 5 %, de préférence 3 %, de préférence 2 % ou même 1 % du poids de la charge minérale selon l'invention. En particulier, la chaux éteinte contient avantageusement moins de 1,0 % en masse de Fe₂O₃, de préférence moins de 0,5 % et de préférence moins de 0,3 %, de façon à ne pas modifier significativement la couleur de la composition polymère ignifugée.

Cette chaux éteinte peut aussi contenir de l'oxyde de calcium qui n'aurait pas été hydraté au cours de la préparation de la chaux éteinte selon l'invention, tout comme elle peut contenir du carbonate de calcium CaCO₃. Ce carbonate de calcium peut provenir soit du calcaire initial dont est dérivée la chaux éteinte selon l'invention (incuits), soit d'une réaction de carbonatation partielle de la chaux éteinte au contact de l'air. La teneur en oxyde de calcium dans la chaux éteinte selon l'invention est généralement inférieure à 3 % en masse, de préférence inférieure à 2 % et de manière avantageuse inférieure à 1 %. Celle en carbonate de calcium est inférieure à 15 % en masse, de préférence inférieure à 10 % et de manière avantageuse inférieure à 6 %, de manière encore plus avantageuse inférieure à 4%. La chaux éteinte peut contenir de l'eau libre, à savoir non liée chimiquement au composé, jusqu'à environ 50 g/kg.

D'une manière générale, la taille des particules de cette chaux éteinte sous forme pulvérulente est intégralement inférieure à 1 mm et souvent inférieure à 250 µm.

En particulier, lorsque la taille des particules est mesurée par granulométrie laser (après dispersion du produit dans du méthanol sans étape de désagglomération par ultra-sons), le d₉₀, qui correspond au diamètre (en µm) pour lequel 90 % en volume des particules de la matière pulvérulente sont plus petites, est de préférence inférieur ou égal à 100 µm, en particulier inférieur ou égal à 60 µm, avantageusement inférieur ou égal à 30 µm et en particulier inférieur ou égal à 10 µm. De même, le d₉₇, qui correspond au diamètre (en µm) pour lequel 97 % en volume des particules de la matière pulvérulente sont plus petites, est de préférence inférieur ou égal à 200 µm, avantageusement inférieur ou égal à 100 µm et en particulier inférieur ou égal à 50 µm. Plus les particules sont petites, mieux elles seront dispersées dans la matrice polymère.

Une chaux éteinte selon l'invention peut être obtenue par les méthodes classiques d'hydratation de chaux vive, soit avec un excès d'eau donnant lieu à la formation d'une suspension (lait de chaux, milk of lime en anglais) ou d'une pâte (lime putty en anglais), soit en voie sèche afin d'obtenir, directement à l'issue de l'hydratation une poudre sèche contenant moins de 50g/kg d'eau libre. Dans le cas des hydratations avec excès d'eau (lait ou pâte), le produit humide doit être filtré, séché et désaggloméré pour obtenir la chaux hydratée selon l'invention.

Avantageusement, ladite charge minérale de la composition polymère ignifugée comprend en outre au moins un composé magnésien, sous forme d'un hydroxyde de magnésium, en tant qu'additif retardateur de flamme.

Dans une forme de réalisation particulière, le composé calcique et le composé magnésien de ladite charge minérale de la composition polymère ignifugée sont deux composés séparés en mélange.

Dans un mode de réalisation de l'invention, le composé calcique et le composé magnésien de ladite charge minérale de la composition polymère ignifugée sont intimement liés et proviennent d'une extinction d'une chaux vive avec une suspension d'hydroxyde de magnésium.

Dans un tel cas, l'hydroxyde de magnésium provenant de la suspension d'extinction est incorporé dans la phase solide des particules d'hydroxyde de calcium. Si du MgO est encore présent à l'issue de l'extinction de chaux vive par une suspension d'hydroxyde de magnésium, il sera présent à raison de moins de 2%, dès lors qu'il s'agit alors d'une phase d'impuretés.

De manière avantageuse, le composé calcique et le composé magnésien de ladite charge minérale de la composition polymère ignifugée sont intimement liés et proviennent d'une extinction totale ou partielle d'une dolomie vive.

Ladite charge minérale dans laquelle le composé calcique est intimement lié au composé magnésien permet une homogénéité des propriétés de résistance au feu et de retard de flamme de la composition polymère ignifugée selon la présente invention.

De préférence, ladite charge minérale comprenant un composé calcique et un composé magnésien intimement liés est une dolomie semi-hydratée de formule générale aCaCO₃.bCa(OH)₂.cMg(OH)₂.dMgO.eCaO, a,b,c,d et e étant des fractions molaires avec (a + b + e)/(c + d) étant compris entre 0,8 et 1,2 et présentant des valeurs telles que :
- b représente la fraction molaire correspondant à une proportion en poids supérieure ou égale à 15 % et inférieure ou égale à 69 %, en particulier de 30 à 65 %, de préférence de 40 à 60 % et de manière particulièrement avantageuse de 45 à 55 %,
- c représente la fraction molaire correspondant à une proportion en poids supérieure ou égale à 1 %, en particulier de 2 à 51 %, de préférence de 3 à 40 %, en particulier de 6 à 30 %, de préférence de 8 à 25 % et de manière particulièrement avantageuse de 10 à 20 %,
- d représente la fraction molaire correspondant à une proportion en poids supérieure ou égale à 1 %, de préférence supérieure à 5 %, avantageusement supérieure à 10 % et de manière particulièrement avantageuse supérieure à 15 %, en particulier supérieure à 20% et généralement inférieure à 41 %, en particulier inférieure à 30%,
- a représente la fraction molaire correspondant à une proportion en poids supérieure ou égale à 0%, de préférence de 1 à 20 %, de préférence inférieure à 18 %, en particulier < 10 %, de préférence < à 8 % et de manière particulièrement avantageuse < 6 %,
- e représente la fraction molaire correspondant à une proportion en poids supérieure ou égale à 0 % et inférieure à 15%, de préférence inférieure à 10%, en particulier à 5 %, de préférence inférieure à 3 % et de manière particulièrement avantageuse < 2 %.

Avantageusement, ladite dolomie semi-hydratée comprend des agglomérats d'agrégats de particules.

En particulier, ladite charge minérale comprenant un composé calcique et un composé magnésien intimement liés est une dolomie totalement hydratée de formule générale aCaCO₃.bCa(OH)₂.cMg(OH)₂.dMgO.eCaO, a,b,c,d et e étant des fractions molaires avec (a + b + e)/(c + d) étant compris entre 0,8 et 1,2 et présentant des valeurs telles que :
- b représente la fraction molaire correspondant à une proportion en poids de 45 à 57 %, de préférence de supérieure à 50 %,
- c représente la fraction molaire correspondant à une proportion en poids de 35 à 42 %, de préférence supérieure à 37 %,
- d représente la fraction molaire correspondant à une proportion en poids de 0 à 2 %, de préférence inférieure à 1 %,
- a représente la fraction molaire correspondant à une proportion en poids supérieure ou égale à 0 %, en particulier de 1 à 10 %, de préférence inférieure à 5 %,
- e représente la fraction molaire correspondant à une proportion en poids de 0 à 3 % de préférence inférieure à 1 %.

Avantageusement, ladite dolomie totalement hydratée comprend des agglomérats d'agrégats de particules.

Par ailleurs, en plus de CaCO₃, Ca(OH)₂, Mg(OH)₂, MgO et CaO, les dolomies semi ou totalement hydratées de la composition selon l'invention peuvent contenir les impuretés usuellement présentes dans les dolomies naturelles, à savoir des phases dérivées de SiO₂, Al₂O, Fe₂O, MnO, P₂O₅, K₂O et/ou SO₃, mais la somme de ces impuretés, exprimées sous la forme des oxydes précités, ne dépasse pas 5 %, de préférence 3 %, de préférence 2 % ou même 1 % du poids de la dolomie semi-hydratée. En particulier, la charge de la composition selon l'invention contient avantageusement moins de 1,0 % en masse de Fe₂O₃, de préférence moins de 0,7 % et de préférence moins de 0,5 %, de façon à ne pas modifier significativement la couleur de la composition polymère ignifugée.

Les dolomies hydratées peuvent contenir de l'eau libre, à savoir non liée chimiquement au composé, jusqu'à environ 50 g/kg.

D'une manière générale, la taille des particules des dolomies hydratées sous forme pulvérulente est intégralement inférieure à 1 mm et souvent inférieure à 250 µm.

En particulier, lorsque la taille des particules de dolomie, hydratée ou semi hydratée, est mesurée par granulométrie laser (après dispersion du produit dans du méthanol sans étape de désagglomération par ultra-sons), le d₉₀, qui correspond au diamètre (en µm) pour lequel 90 % en volume des particules de la matière pulvérulente sont plus petites, est de préférence inférieur ou égal à 60 µm, avantageusement inférieur ou égal à 30 µm et en particulier inférieur ou égal à 10 µm. De même, le d₉₇, qui correspond au diamètre (en µm) pour lequel 97 % en volume des particules de la matière pulvérulente sont plus petites, est de préférence inférieur ou égal à 200 µm, avantageusement inférieur ou égal à 100 µm et en particulier inférieur ou égal à 50 µm. Plus les particules sont petites, mieux elles seront dispersées dans la matrice polymère.

Les dolomies semi ou totalement hydratées sont obtenues par des procédés classiques d'hydratation des dolomies, soit avec un excès d'eau donnant lieu à la formation d'une suspension (lait de dolomie) ou d'une pâte, soit en voie sèche afin d'obtenir, directement à l'issue de l'hydratation une poudre sèche contenant moins de 50g/kg d'eau libre. Dans le cas des hydratations avec excès d'eau (lait ou pâte), le produit humide doit être filtré, séché et désaggloméré pour obtenir une dolomie hydratée selon l'invention. Dans le cas des hydratations en voie sèche, une hydratation à pression atmosphérique conduit à la production de dolomie semi-hydratée alors que l'obtention d'une dolomie totalement hydratée nécessite une hydratation sous pression.

D'autres formes de réalisation suivant l'invention d'utilisation dans une composition polymère organique ignifugée, d'une charge minérale comprenant un composé calcique contenant de l'hydroxyde de calcium comme additif de résistance au feu sont indiquées dans les revendications annexées.

Le polymère organique de la composition peut être de type thermoplastique, thermodurcissable ou élastomère, d'origine naturelle ou synthétique. Il peut être choisi dans le groupe constitué des polyéthylènes, des polypropylènes, des polystyrènes, des copolymères d'éthylène et de propylène (EPR), des terpolymères-éthylène-propylènediène (EPDM), des copolymères d'éthylène et d'acétate de vinyle (EVA) à faible/moyenne teneur en acétate, des copolymères d'éthylène et d'acrylate de méthyle (EMA) à faible/moyenne teneur en acrylate, des copolymères d'éthylène et d'acrylate d'éthyle (EEA) à faible teneur en acrylate, des copolymères d'éthylène et d'acrylate de butyle (EBA) à faible teneur en acrylate, des copolymères d'éthylène et d'octène, des polymères à base d'éthylène, des polymères à base de polypropylène, des polymères à base de polystyrène, des polymères halogénés, ou un quelconque mélange de ces composés.

De préférence, dans l'utilisation selon la présente invention, la charge minérale est incorporée dans la composition polymère ignifugée à hauteur de 1 à 80 % en poids, avantageusement de 40 à 75 % en poids, par rapport au poids total de ladite composition polymère ignifugée.

Dans l'utilisation selon la présente invention, la charge minérale est une charge minérale telle que décrite ci-avant. Il est entendu que une charge minérale selon la présente invention peut-être combinée avec des retardateurs de flamme classique du type ATH ou MDH.

Pour la mise en oeuvre de l'utilisation suivant l'invention, on peut prévoir un procédé de fabrication d'une composition polymère ignifugée comprenant les étapes de
a) mélange d'au moins deux polymères en grains pour former un premier mélange de polymères en grains, à l'état sec dans une première cuve de mélange,
b) amenée dudit mélange en grains dans une cuve de malaxage,
c) amenée d'au moins une charge minérale selon la présente invention, dans ladite cuve de malaxage avec une formation d'un deuxième mélange
d) fusion dudit deuxième mélange pour former ladite composition polymère ignifugée à l'état fondu, et amenée de ladite composition polymère ignifugée à l'état fondu au travers d'une filière d'extrusion pour former des fils de composition polymère ignifugée extrudés, et
e) une coupe desdits fils de composition polymère ignifugée à une taille prédéterminée pour former des granulés (également appelés compounds) de composition polymère ignifugée solides.

Avantageusement, dans ce procédé, au moins un desdits au moins deux polymères est choisi dans le groupe constitué des polyéthylènes, des polypropylènes, des polystyrènes, des copolymères d'éthylène et de propylène (EPR), des terpolymères-éthylène-propylènediène (EPDM), des copolymères d'éthylène et d'acétate de vinyle (EVA) à faible/moyenne teneur en acétate, des copolymères d'éthylène et d'acrylate de méthyle (EMA) à faible/moyenne teneur en acrylate, des copolymères d'éthylène et d'acrylate d'éthyle (EEA) à faible teneur en acrylate, des copolymères d'éthylène et d'acrylate de butyle (EBA) à faible teneur en acrylate, des copolymères d'éthylène et d'octène, des polymères à base d'éthylène, des polymères à base de polypropylène, des polymères à base de polystyrène, des polymères halogénés, ou un quelconque mélange de ces composés.

La charge minérale peut être incorporée dans la composition polymère ignifugée à hauteur de 1 à 80 % en poids, avantageusement de 40 à 75 % en poids, par rapport au poids total de ladite composition polymère ignifugée.

La présente invention se rapporte aussi à une utilisation suivant l'invention pour former des fils, des granulés, ou des gaines de composition polymère organique ignifugée, par exemple des gaines pour câbles électriques contenant comme additif de résistance au feu un hydroxyde de calcium comme charge minérale d'une composition polymère organique ignifugée.

De préférence, ladite composition polymère organique ignifugée comprend un polymère de type thermoplastique, thermodurcissable ou élastomère, d'origine naturelle ou synthétique, de préférence, choisi dans le groupe constitué des polyéthylènes, des polypropylènes, des polystyrènes, des copolymères d'éthylène et de propylène (EPR), des terpolymères-éthylène-propylènediène (EPDM), des copolymères d'éthylène et d'acétate de vinyle (EVA) à faible/moyenne teneur en acétate, des copolymères d'éthylène et d'acrylate de méthyle (EMA) à faible/moyenne teneur en acrylate, des copolymères d'éthylène et d'acrylate d'éthyle (EEA) à faible teneur en acrylate, des copolymères d'éthylène et d'acrylate de butyle (EBA) à faible teneur en acrylate, des copolymères d'éthylène et d'octène, des polymères à base d'éthylène, des polymères à base de polypropylène, des polymères à base de polystyrène, des polymères halogénés, ou un quelconque mélange de ces composés.

Avantageusement, ladite gaine polymère comprend une charge minérale selon l'invention, telle que mentionnée ci-avant.

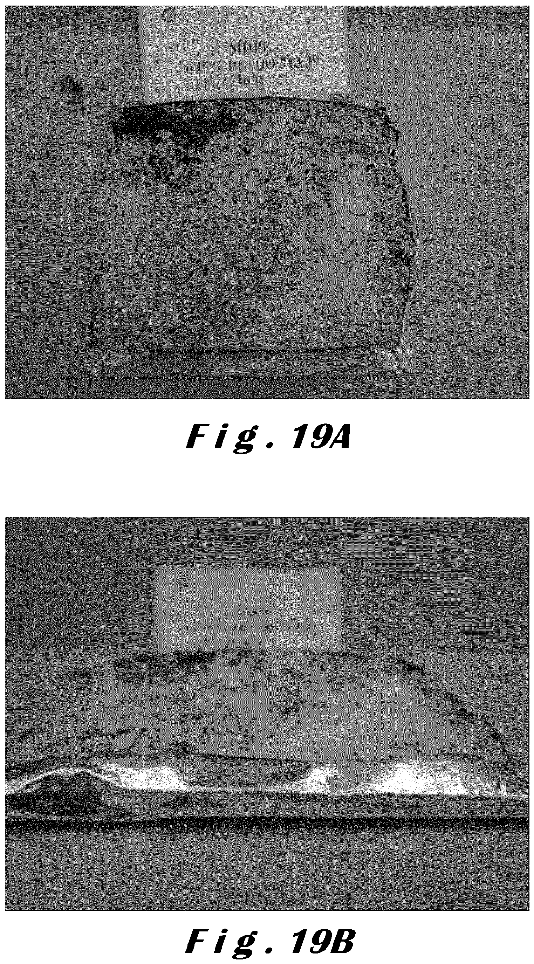

Les figures 19A et 19B sont des photographies du résidu de combustion de la composition polymère ignifugée selon l'exemple comparatif 4.

Lors de l'utilisation suivant l'invention on obtient, suite à une combustion, un résidu de combustion d'une composition polymère ignifugée comprenant une charge minérale selon l'invention, qui est un résidu cohésif présentant une résistance mécanique à la rupture en compression moyenne qui est supérieure à 3 kPa, de préférence supérieure à 8 kPa, de manière préférentielle supérieure à 20 kPa et de manière particulièrement avantageuse supérieure à 60 kPa.

Avantageusement, ce résidu de combustion cohésif est un résidu qui n'est traversé que par un nombre de fissures très limité, inférieur ou égal à 3, de préférence inférieur ou égal à 2, voire à 1 et de manière particulièrement préférentielle nul, après combustion selon la méthode normalisée du cône calorimètre ISO 5660-1 ou ASTM E 1354.

De préférence, le résidu de combustion, après combustion selon la méthode normalisée du cône calorimètre ISO 5660-1 ou ASTM E 1354, présente une taille maximale de résidu de combustion dont la section est assimilée à un carré pouvant être prélevé sans être cassé dans ledit résidu obtenu supérieure ou égale à 10 mm, de préférence supérieure ou égale à 30 mm, de préférence supérieure ou égale à 50 mm, à partir d'un échantillon avant combustion de section carrée de 100 mm.

D'autres formes de réalisation du résidu de combustion suivant l'invention sont indiquées dans les revendications annexées

D'autres caractéristiques, détails et avantages de l'invention ressortiront de la description donnée ci-après, à titre non limitatif et en faisant référence aux dessins et aux exemples annexés.

Le tableau 1 regroupe les principales caractéristiques des chaux et dolomies hydratées utilisées dans les exemples. La notation d_{X} représente un diamètre, exprimé en µm, par rapport auquel X % des particules mesurées sont plus petites.

Le tableau 2 donne les propriétés de l'ATH et du MDH qui servent de charges de référence.

Le tableau 3 regroupe l'ensemble des valeurs servant à caractériser les résidus de combustion obtenus à l'issue du test de cône calorimétrie pour les différentes compositions testées dans les exemples.

Il est important de préciser que, dans les tableaux ci-dessous, apparaissent deux mesures de granulométrie. La mesure de granulométrie 1 est réalisée en plaçant simplement la charge dans du méthanol sans aucune étape de désagglomération. Les résultats de cette mesure correspondent alors à des tailles d'agglomérats. La méthode de granulométrie 2 est quant à elle réalisée après désagglomération de la charge par ultrason et les valeurs déterminées par cette méthode s'apparentent plus à la taille des particules individuelles. Dans la description de l'invention, les exemples ou encore les revendications, pour des raisons de simplification, les seules valeurs prises en considération sont les valeurs déterminées par la méthode 1, c'est-à-dire les tailles d'agglomérats.
La figure 1 est une illustration schématique du dispositif de mesure de la résistance mécanique en compression des résidus de combustion.
La figure 2 est un graphique illustrant les résultats de test au feu par cône calorimétrie des compositions polymères ignifugées selon les exemples 1 à 3.
Les Figures 3A et 3B sont des photographies du résidu de combustion de la composition polymère ignifugée selon l'exemple 1.
Les Figures 4A et 4B sont des photographies du résidu de combustion de la composition polymère ignifugée selon l'exemple 2.
Les figures 5A et 5B sont des photographies du résidu de combustion de la composition polymère ignifugée selon l'exemple 3.
La figure 6 est un graphique illustrant les résultats de test au feu par cône calorimétrie d'une composition polymère ignifugée selon l'exemple 4.
Les figures 7A et 7B sont des photographies du résidu de combustion de la composition polymère ignifugée selon l'exemple 4.
La figure 8 est un graphique illustrant les résultats de test au feu par cône calorimétrie descompositions polymères ignifugées selon lesexemples 5 à 7.
Les figures 9A et 9B sont des photographies du résidu de combustion de la composition polymère ignifugée selon l'exemple 5.
La figure 10 est une photographie du résidu de combustion de la composition polymère ignifugée selon l'exemple 6.
La figure 11 est une photographie du résidu de combustion de la composition polymère ignifugée selon l'exemple 7.
La figure 12 est un graphique illustrant les résultats de test au feu par cône calorimétrie des compositions polymères ignifugées selon les exemples 8 à 10.
Les figures 13A et 13B sont des photographies du résidu de combustion de la composition polymère ignifugée selon l'exemple 8.
Les figures 14A et 14B sont des photographies du résidu de combustion de la composition polymère ignifugée selon l'exemple 9.Les figures 15A et 15B sont des photographies du résidu de combustion de la composition polymère ignifugée selon l'exemple 10.
Les figures 16A et 16B sont des photographies du résidu de combustion de la composition polymère ignifugée selon l'exemple comparatif 1.
Les figures 17A et 17B sont des photographies du résidu de combustion de la composition polymère ignifugée selon l'exemple comparatif 2.
Les figures 18A et 18B sont des photographies du résidu de combustion de la composition polymère ignifugée selon l'exemple comparatif 3.
Les figures 20A et 20B sont des photographies du résidu de combustion de la composition polymère ignifugée selon l'exemple comparatif 5.
Les figures 21A et 21B sont des photographies du résidu de combustion de la composition polymère ignifugée selon l'exemple comparatif 6.

Sur les figures, les éléments identiques ou analogues portent les mêmes références.

La présente invention se rapporte donc à une utilisation d'une composition polymère ignifugée et résistante au feu comprenant un polymère et une charge minérale qui comprend au moins un composé calcique sous forme d'hydroxyde de calcium.

La charge minérale peut également comprendre un composé magnésien. Ce composé magnésien peut être ajouté en mélange ou être intimement lié au composé calcique en réalisant une extinction partielle ou totale de dolomie vive.

Ces compositions polymères ignifugées présentent la caractéristique extrêmement avantageuse de fournir à l'issue de la combustion un résidu cohésif qui, en plus d'un effet retardateur de flamme (« flame retardant » en anglais) confère à la charge un effet de résistance au feu (« fire résistant » en anglais) parfois appelé également effet « céramisant ».

Aucun test standard n'est disponible à l'heure actuelle pour la mesure de la cohésion des résidus de combustion de compositions polymères. Dans un premier temps, la cohésion du résidu peut être évaluée qualitativement par une simple observation du résidu obtenu à l'issue du test de cône calorimétrie. Lors de cette observation, quelques données quantitatives peuvent toutefois être estimées : i) un nombre de fissures traversant le résidu (fissures transverses) ; ii) la profondeur de ces fissures (c'est-à-dire si les fissures sont seulement présentes à la surface ou si elles traversent toute l'épaisseur du résidu de combustion) ; iii) la cohésion peut également être représentée par la taille maximale de l'échantillon (échantillon faisant toute l'épaisseur du résidu et dont la section est assimilée à un carré) qui peut être prélevé sans être cassé dans le résidu obtenu à l'issue du test de cône calorimétrie (qui présente une section carrée de 100 mm de côté).

Au sens de l'invention, on appelle « fissure transverse » une fissure qui traverse de part en part le résidu de combustion obtenu à l'issue du test de cône calorimétrie et qui se présente sous la forme d'un échantillon de section carrée de 100 mm de côté.

Pour garantir la cohésion du résidu, en plus d'être présentes en nombre limité, ces fissures transverses doivent être peu profondes, c'est-à-dire qu'elles ne doivent pas être présentes sur toute l'épaisseur du résidu.

Tout résidu comprenant 1 à 10 fissure(s) profonde(s) est considéré comme moyennement cohésif.

Tout résidu comprenant plus de 10 fissures profondes est considéré comme n'étant pas cohésif.

Tout résidu de combustion sera considéré comme cohésif lorsqu'il n'est traversé que par un nombre de fissures très limité, inférieur ou égal à 3, de préférence inférieur ou égal à 2, voire à 1 et de manière particulièrement préférentielle nul, après combustion selon la méthode normalisée du cône calorimètre ISO 5660-1 ou ASTM E 1354

En considérant maintenant la taille maximale de l'échantillon (côté de échantillon faisant toute l'épaisseur du résidu et dont la section est assimilée à un carré) qui peut être prélevé sans être cassé dans le résidu obtenu à l'issue du test de cône calorimétrie (qui présente lui-même une section carrée de 100 mm de côté), le résidu est dit cohésif si cette taille est supérieure ou égale à 10 mm, de préférence supérieure ou égale à 30 mm, de préférence supérieure ou égale à 50 mm.

Par ailleurs, une méthode quantitative a été développée dans le cadre de cette invention afin de déterminer la résistance mécanique des résidus de combustion. Cette méthode n'est applicable que pour les résidus de combustion dans lesquels il est possible de prélever un échantillon dont la section s'apparente à un carré d'au moins 100 mm de côté, c'est-à-dire dont la section est au moins aussi grande que la surface du plateau mobile utilisé pour cette mesure.

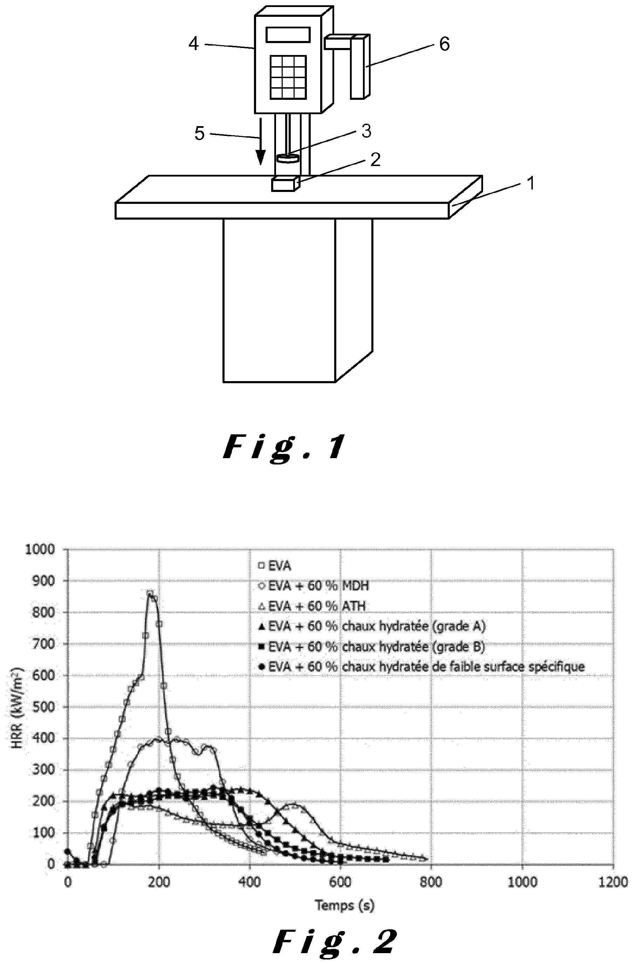

Elle consiste à réaliser une mesure de résistance à la compression à l'aide d'un texturomètre Chatillon (modèle DFGS50) sur trois prélèvements d'un résidu de combustion. Ces trois prélèvements sont effectués à des endroits différents dans le résidu de section carrée mesurant 100 mm de côté obtenu à l'issue des mesures de cône calorimétrie. Le principe de cette méthode est illustré sur la Figure 1. Chaque prélèvement 2 est placé au centre d'un plateau métallique rectangulaire fixe 1 mesurant environ 100 x 200 mm. Manuellement, un second plateau métallique 3, beaucoup plus petit cette fois et circulaire (de diamètre 12 mm), est amené au moyen d'un levier 6 permettant de faire descendre manuellement le plateau mobile, au contact de l'échantillon 2. Ce second plateau 3 étant relié à une jauge de force 4, la force appliquée flèche 5 sur l'échantillon par le plateau mobile au moment de la rupture totale de l'échantillon peut être déterminée. La valeur utile est la moyenne des forces de rupture mesurées pour les trois prélèvements d'un résidu de combustion. La force mesurée est exprimée en Newton (N), mais peut être normalisée par la surface du plateau mobile circulaire afin de déterminer la résistance mécanique en compression du résidu en Pascal (Pa). Bien entendu, les prélèvements utilisés pour cette mesure doivent avoir une section au moins aussi grande que la surface du plateau mobile circulaire, de sorte que la force soit appliquée sur toute la surface de ce plateau.

Cette méthode ne permet pas la détermination d'un critère unique et son résultat dépend d'effets antagonistes. En effet, plus le résidu est poreux, suite par exemple à des phénomènes assimilés à de l'intumescence, plus sa résistance en compression sera faible, bien que sa cohésion puisse être très bonne. A l'inverse, un résidu peu poreux peut présenter une mauvaise cohésion et un taux de fissuration élevé alors que chaque prélèvement de ce résidu peut avoir une résistance élevée.

### EXEMPLES.-

### Exemple 1.- Utilisation en tant que charge retardatrice de flamme d'une chaux hydratée de grade granulométrique fin dans une composition polymère d'EVA.

Une chaux hydratée a été obtenue industriellement par calcination d'un calcaire naturel, puis hydratation (extinction) en voie sèche, dans un hydrateur industriel, de la chaux vive obtenue après calcination. La chaux éteinte produite a ainsi une humidité inférieure à 2 % en poids et se présente sous forme pulvérulente. Elle est ensuite soumise à une étape industrielle de séparation granulométrique permettant de retirer les particules les plus grossières. A l'issue de ce procédé de fabrication industriel, la chaux éteinte est une nouvelle fois séparée par différentes étapes de séparation à l'air, à l'échelle du laboratoire cette fois, afin d'obtenir un grade granulométrique fin, appelé grade granulométrique A. Les propriétés de cette chaux hydratée de grade A sont regroupées dans le Tableau 1.

Cette charge est incorporée à hauteur de 60 % en masse dans une matrice de co-polymère d'éthylène et d'acétate de vinyle contenant 28 % d'acétate de vinyle (EVA 328, Escorene UL328, produit par ExxonMobil Chemical). Le mélange entre la matrice polymère et la charge minérale est réalisé à l'aide d'une extrudeuse bi-vis. Des plaques, préparées avec une presse hydraulique, mesurant 100 x 100 x 4 mm³ ont été ensuite soumises au test au feu par cône calorimétrie. Les résidus obtenus à l'issue du test au cône calorimètre (résidus de combustion) sont dans un premier temps observés et photographiés afin d'estimer leur degré de cohésion, puis leur résistance mécanique en compression est caractérisée en suivant la méthode décrite précédemment dans le texte et illustrée à la Figure 1.

Les résultats des tests au feu par cône calorimétrie sont représentés à la Figure 2. Ils sont comparés à ceux obtenus pour le polymère hôte non chargé (EVA) et pour le même polymère, chargé dans les mêmes conditions et avec les mêmes proportions d'ATH (Albemarle Martinal OL 107 LEO, décrit dans le Tableau 2) et de MDH (Albemarle Magnifin H10, décrit dans le Tableau 2).

Les tests de cône calorimétrie réalisés pour cette composition montrent clairement que l'incorporation de 60 % de cette chaux hydratée de grade A dans la matrice d'EVA diminue nettement l'énergie libérée pendant la combustion du polymère (le maximum de la courbe HRR est nettement plus faible en comparaison de l'EVA non chargé). Cette diminution est comparable à celle mesurée pour la composition d'EVA contenant de l'ATH. Elle est par ailleurs plus marquée que celle mesurée pour la composition d'EVA contenant du MDH. D'autre part, la libération de chaleur est plus étalée dans le temps que pour l'EVA non chargé, ce qui permet d'éviter les points chauds qui sont à l'origine de la propagation du feu d'une pièce à l'autre.

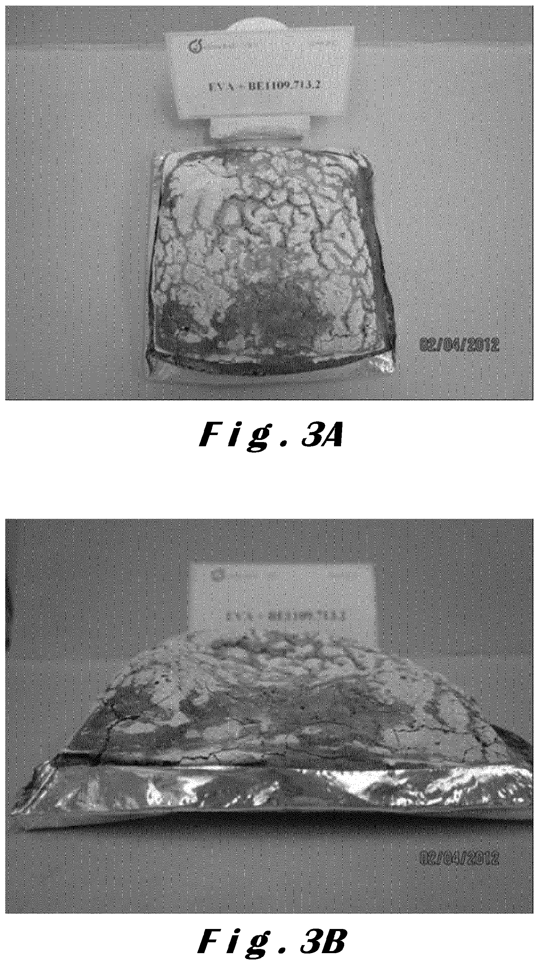

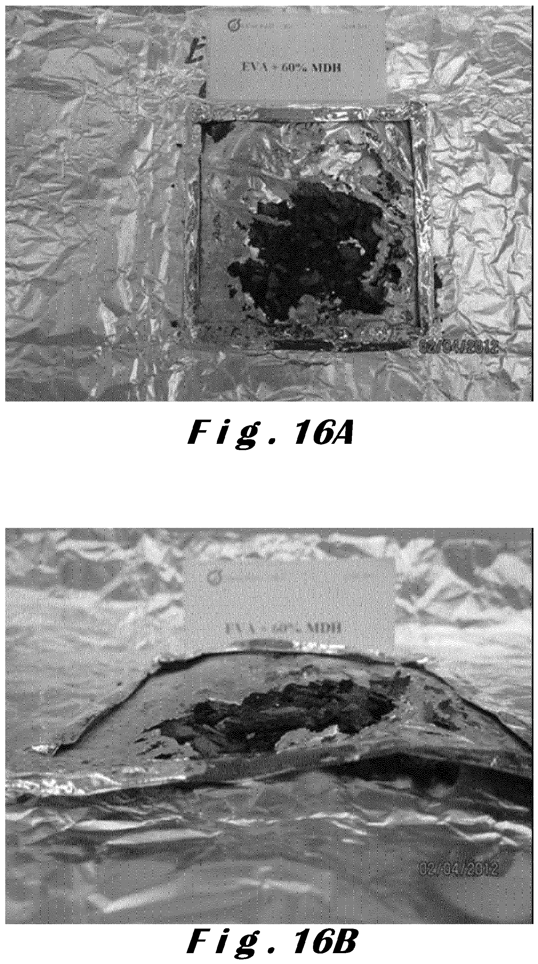

L'observation des résidus de combustion montrés aux Figures 3A et 3B et caractérisés au Tableau 3 permet de conclure qu'à l'issue de sa combustion, la composition de cet exemple a mené à la formation d'un résidu cohésif : ce résidu est composé d'une couche unique et non pas d'une poudre, d'une cendre ou de tout autre matériau divisé. Ce résidu a donc un aspect totalement différent de celui des résidus obtenus pour les compositions à base de MDH ou d'ATH qui se présentent sous la forme de poudre ou de cendre (Figures 16A et 16B dans le cas du MDH et 17A et 17B dans le cas de l'ATH). La couche du résidu de cet exemple est 'gonflée' (Figure 3B). Le résidu ne contient aucune fissure transverse, mais uniquement des fissures plus courtes et qui ne sont pas des fissures profondes, mais uniquement des fissures de surface. La mesure de la résistance mécanique en compression du résidu conduit à une valeur moyenne (sur 3 mesures réalisées avec l'équipement présenté sur la Figure 1 sur des prélèvements effectués à différents endroits dans le résidu de combustion) de 125 kPa, les trois valeurs mesurées étant 111 kPa, 122 kPa et 143 kPa (Tableau 3).

### Exemple 2.- Utilisation en tant que charge retardatrice de flamme d'une chaux hydratée de grade granulométrique plus grossier dans une composition d'EVA.

La charge minérale de l'exemple 2 a la même origine que la chaux hydratée de l'exemple 1 et lui est donc similaire, la seule différence étant sa granulométrie. En effet, les étapes de séparation à l'air réalisées à l'échelle du laboratoire pour la chaux hydratée de grade A de l'exemple 1 ont été réalisées dans des conditions différentes, avec une taille de coupure plus grossière, pour obtenir la chaux hydratée de grade granulométrique B plus grossier que le grade A. Les propriétés de cette chaux hydratée de grade B sont regroupées dans le Tableau 1. La granulométrie dont il s'agit ici correspond à la mesure de granulométrie 1 présentée dans le Tableau 1 ci-dessous, c'est-à-dire à la mesure réalisée par granulométrie laser sur la poudre dispersée dans du méthanol et non désagglomérée et représentant la taille des agglomérats. La matrice polymère est à nouveau l'EVA 328.

Les résultats des tests au feu par cône calorimétrie enregistrés pour cette composition sont représentés à la Figure 2 et indiquent un effet retardateur de flamme tout à fait similaire à celui de la chaux hydratée de grade granulométrique A de l'exemple 1, malgré toutefois une durée d'efficacité plus courte.

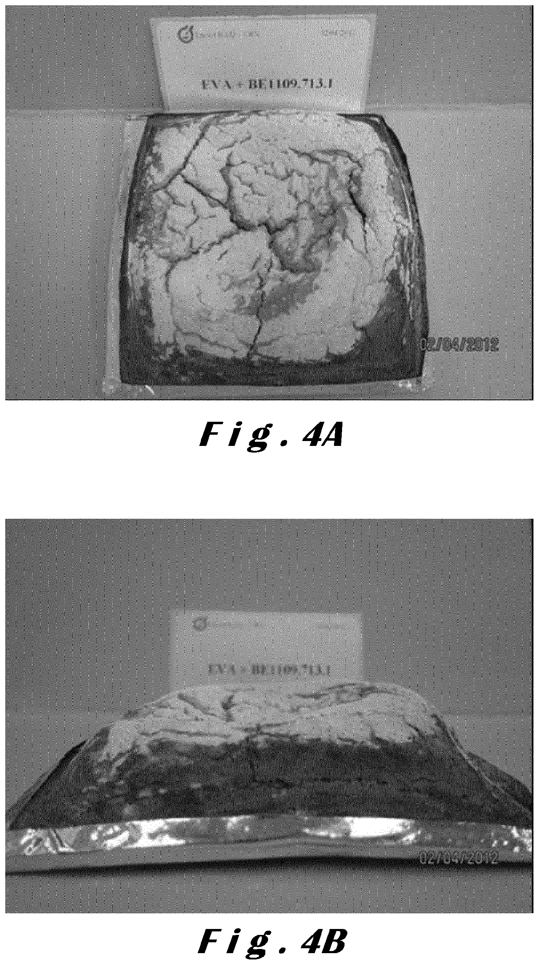

Les résidus obtenus à l'issue du test au cône calorimètre (résidus de combustion), ont été caractérisés de la même manière que dans l'exemple 1. L'observation de ces résidus montrés aux Figures 4A et 4B et caractérisés au Tableau 3 permet de conclure qu'à l'issue de sa combustion, la composition de cet exemple a mené à la formation d'un résidu cohésif comparable à celui obtenu à partir de la composition de l'exemple 1. La mesure de la résistance mécanique du résidu conduit à une valeur moyenne (sur 3 mesures réalisées sur des prélèvements effectués à différents endroits dans le résidu de combustion) de 134 kPa, les trois valeurs mesurées étant 120 kPa, 125 kPa et 157 kPa.

### Exemple 3.- Utilisation en tant que charge retardatrice de flamme d'une chaux hydratée de basse surface spécifique dans une composition polymère d'EVA

Cet exemple est similaire à l'exemple 2, à ceci près que la chaux hydratée standard de l'exemple 2 a été remplacée par une chaux hydratée ayant une surface spécifique plus faible. Cette chaux hydratée de faible surface spécifique est synthétisée industriellement avec un procédé semblable à celui utilisé pour la production de chaux hydratée standard, mais en ajoutant au cours de la synthèse un additif qui accélère la cinétique d'hydratation de la chaux vive, conduit à la fermeture de la porosité et empêche le développement de la surface spécifique de la chaux hydratée. Les principales caractéristiques de la chaux hydratée utilisée dans cet exemple sont regroupées dans le Tableau 1.

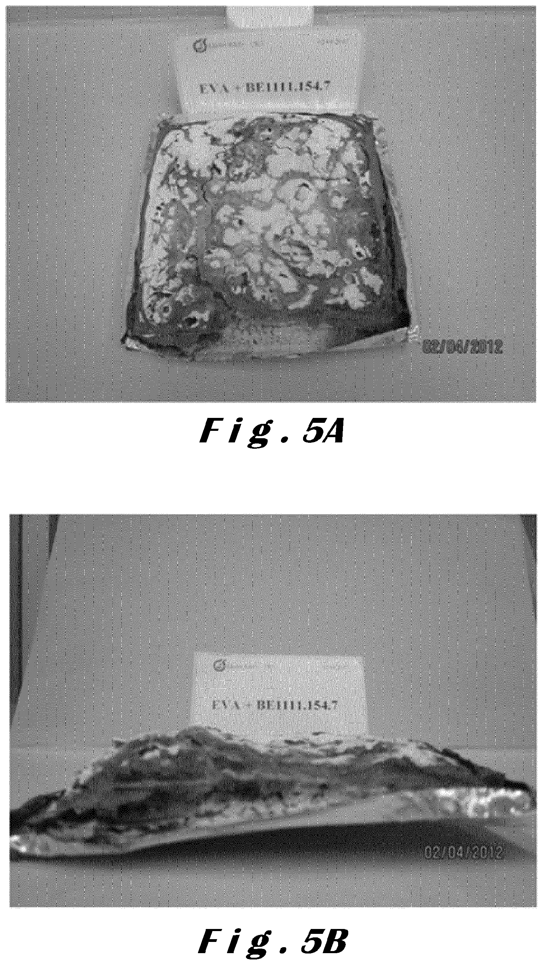

Les résultats des tests au feu par cône calorimétrie sont représentés à la Figure 2 et sont tout à fait comparables à ceux obtenus pour la composition de l'exemple 2. Les résidus obtenus à l'issue de la combustion de la composition de cet exemple sont présentés sur les figures 5A et 5B. Ces photographies témoignent de la formation d'un résidu cohésif à l'issue de la combustion de la composition de cet exemple, ce résidu ne contenant aucune fissure transverse ni aucune fissure profonde. La résistance en compression mesurée comme dans les exemples précédents est de 26, 33 et 37 kPa respectivement sur les trois prélèvements effectués dans le résidu cohésif, soit une moyenne de 32 kPa.

### Exemple 4.- Utilisation en tant que charge retardatrice de flamme d'une chaux hydratée de grade granulométrique fin dans une composition polymère de polystyrène.

L'exemple 4 est similaire à l'exemple 1, en ce que la charge minérale est toujours la chaux hydratée de grade granulométrique A présentée au Tableau 1, mais la matrice polymère est cette fois du polystyrène (PS, Polystyrol VPT0013 GR2). Le taux de charge dans la matrice est de 50 % en poids.

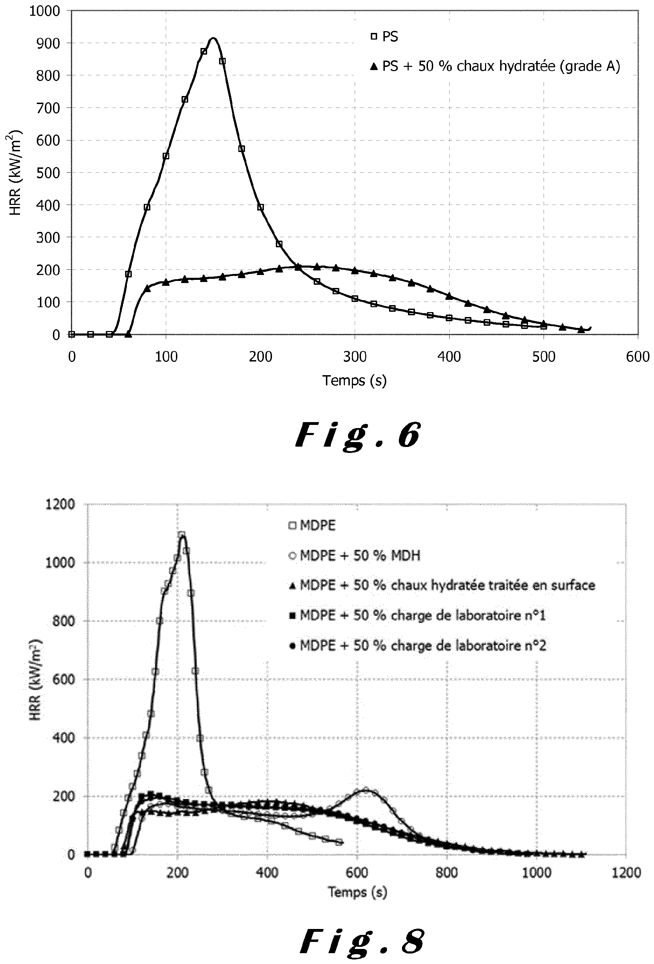

Les résultats des tests au feu par cône calorimétrie enregistrés pour cette composition sont représentés à la Figure 6. Ils y sont comparés aux résultats obtenus pour le polymère hôte non chargé (PS) et indiquent, une fois de plus, un effet retardateur de flamme très important de la chaux hydratée. Les résidus obtenus à l'issue du test au cône calorimètre (résidus de combustion), ont été caractérisés de la même manière que dans l'exemple 1.

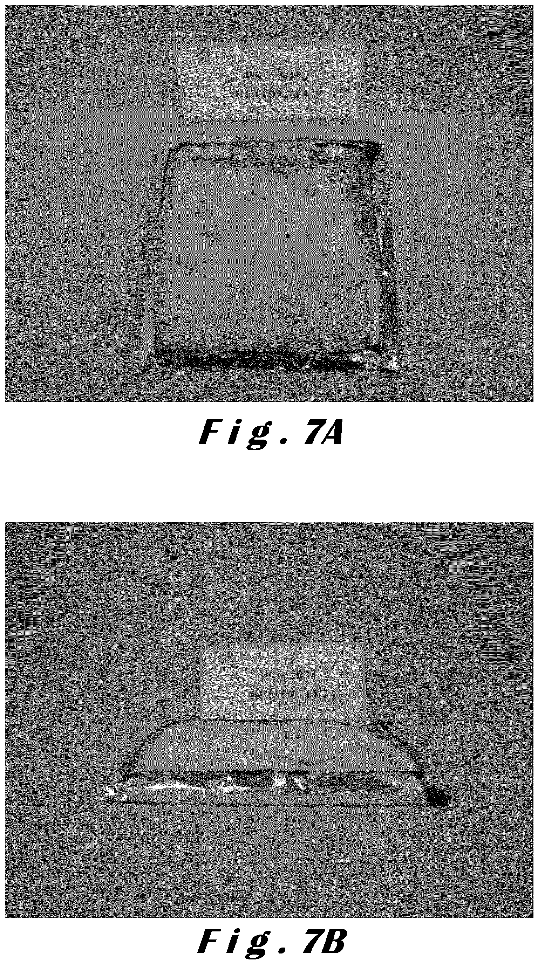

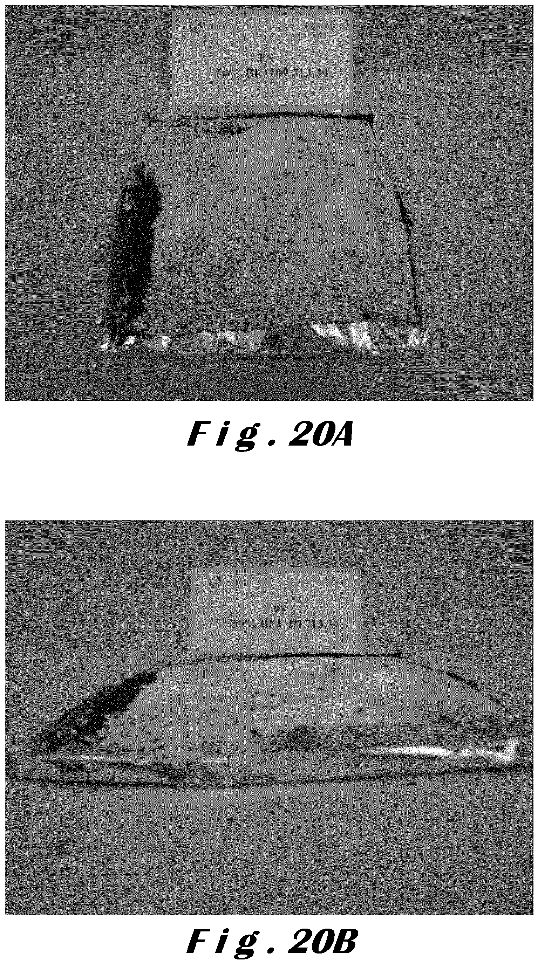

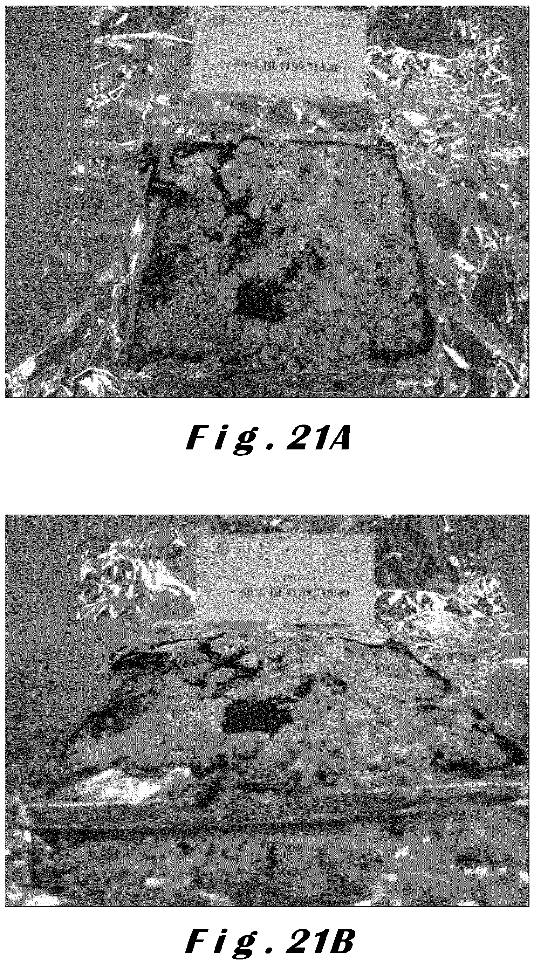

L'observation des résidus de combustion montrés aux Figures 7A et 7B et caractérisés au Tableau 3 permet de dire qu'à l'issue de sa combustion, la composition de cet exemple a mené à la formation d'un résidu moyennement cohésif : contrairement aux résidus obtenus à partir des compositions de polystyrène chargées avec du MDH ou de l'ATH qui se présentent sous la forme de poudre ou de cendre (Figures 20A et 20B dans le cas du MDH et Figure 21A et 21B dans le cas de l'ATH), le résidu obtenu avec la composition de cet exemple est composé d'une couche cohésive même si cette couche est fissurée à plusieurs endroits. Le résidu comprend 2 fissures transverses profondes. Malgré cette fissuration, un échantillon de section apparentée à un carré de 30 mm de côté environ peut être prélevé sur toute l'épaisseur de ce résidu. Par ailleurs, la mesure de la résistance mécanique du résidu conduit à une valeur moyenne (sur 3 mesures réalisées sur des prélèvements effectués à différents endroits dans le résidu de combustion) de 98 kPa, les trois valeurs mesurées étant 67 kPa, 105 kPa et 123 kPa. Si la cohésion du résidu de combustion est moins bonne pour cette composition que pour la composition de l'exemple 1 ci-dessus composée de la même charge minérale mais d'une autre matrice polymère, la résistance mécanique est en revanche tout à fait satisfaisante pour le résidu de la composition de cet exemple.

### Exemple 5.- Utilisation en tant que charge retardatrice de flamme d'une chaux hydratée de grade granulométrique fin traitée en surface dans une composition polymère de MDPE.

La charge retardatrice de flamme utilisée dans la composition de cet exemple est obtenue en traitant en surface avec du stéarate de calcium une chaux hydratée standard. Pour cela, une chaux hydratée tout à fait comparable à celle utilisée dans l'exemple 1 (de même origine et de même grade granulométrique) est choisie, puis 2 kg de cette chaux sont placés dans un mélangeur horizontal à socs de marque Lödige d'une capacité totale de 20 L (modèle M20), préalablement chauffé à 60 °C. Du stéarate de calcium est ensuite ajouté dans ce mélangeur à hauteur de 4 % de la masse de la chaux hydratée (soit 80g de stéarate de calcium). L'agitation dans le mélangeur est démarrée puis le mélange est porté à 200 °C (il faut environ 17 minutes pour chauffer le mélange de 60 à 200 °C). Lorsque cette température de 200 °C est atteinte, le mélange est prolongé pendant 10 minutes à 200 °C, avant d'êtrestoppé, puis le produit est laissé au repos jusqu'à refroidissement complet.

Cette charge traitée en surface est ensuite incorporée à hauteur de 50 % en masse dans une matrice de polyéthylène de moyenne densité (MDPE 3802, grade pour câble produit par Total). L'incorporation de la charge dans cette matrice est réalisée avec un mélangeur de type Brabender. Les plaques mesurant 100 x 100 x 4 mm³ servant au test au feu par cône calorimétrie ont été préparées avec une presse hydraulique.

A nouveau, les résidus de combustion obtenus après le test au cône calorimètre des échantillons de la composition de cet exemple ont été caractérisés.

Les résultats enregistrés lors des mesures au cône calorimètre sont comparés sur la Figure 8 à ceux obtenus pour le polymère hôte non chargé (MDPE) et pour ce même polymère chargé dans les mêmes conditions et avec les mêmes proportions de MDH (dont les principales propriétés sont données dans le Tableau 2).

A nouveau, ces résultats indiquent un net effet retardateur de flamme de la chaux hydratée en comparaison du polymère non chargé, effet tout à fait comparable à celui du MDH, malgré toutefois un temps d'ignition plus court.

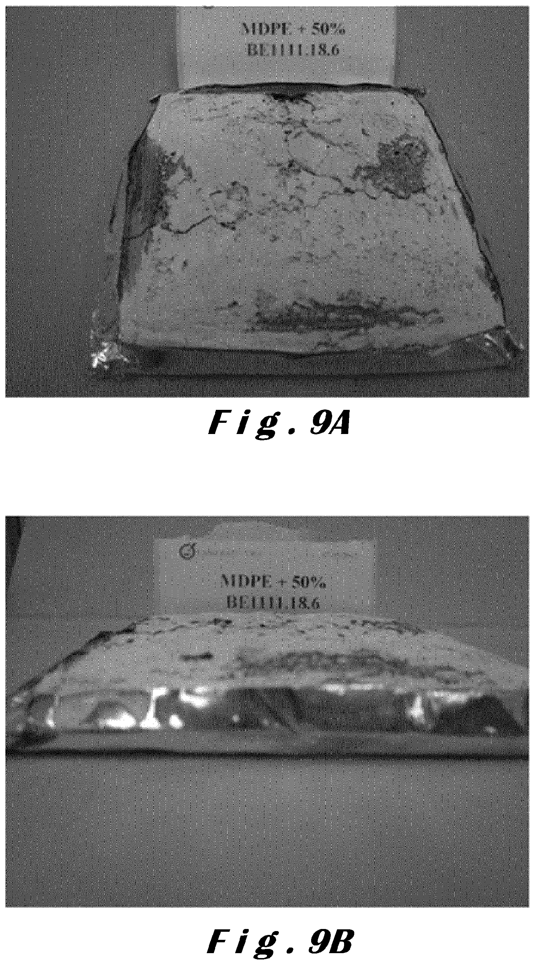

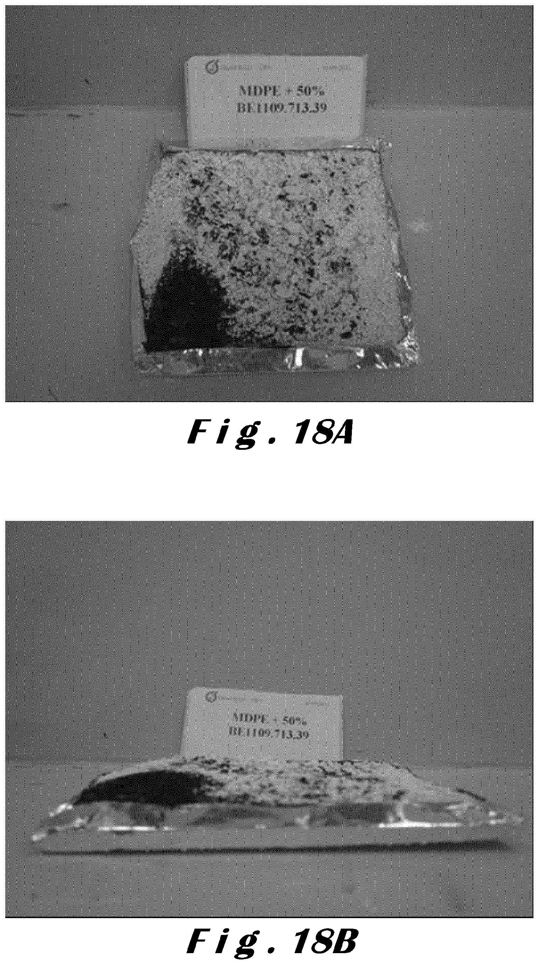

L'observation des résidus de combustion montrés aux Figures 9A et 9B et caractérisés au Tableau 3 permet de conclure qu'à l'issue de sa combustion, la composition de cet exemple a mené à la formation d'un résidu cohésif : ce résidu est composé d'une couche cohésive, contrairement au résidu obtenu pour une composition comparable de MDPE et de MDH dont le résidu s'apparente à une poudre ou à une cendre (Figures 18A et 18B). Le résidu comprend 1 fissure transverse et cette fissure n'est pas profonde. Malgré cette fissuration, un échantillon de section apparentée à un carré de 30 mm de côté environ peut être prélevé sur toute l'épaisseur de ce résidu. Par ailleurs, la mesure de la résistance mécanique du résidu conduit à une valeur moyenne (sur 3 mesures réalisées sur des prélèvements effectués à différents endroits dans le résidu de combustion) de 17 kPa, les trois valeurs mesurées étant 11 kPa, 19 kPa et 20 kPa.

### Exemple 6.- Utilisation en tant que charge retardatrice de flamme d'une charge minérale composée de Ca(OH)₂ et de Mg(OH)₂ intimement liés dans une composition polymère de MDPE.

Dans cet exemple, la matrice polymère est le MDPE comme cela était déjà le cas dans l'exemple 5. En revanche, contrairement aux exemples précédents, la charge minérale a été synthétisée en laboratoire. La synthèse est réalisée dans un hydrateur pilote, dans lequel de la chaux vive est hydratée en présence de Mg(OH)₂ d'origine commerciale se présentant sous la forme d'une suspension aqueuse contenant 53 % en masse de Mg(OH)₂. Les débits de chaux vive et de suspension de Mg(OH)₂ sont calculés de manière à obtenir, en sortie de l'hydrateur, un produit contenant environ 22 % en masse de Mg(OH)₂ et le reste de chaux hydratée (environ 73 % de Ca(OH)₂) d'impuretés et d'incuits. La suspension de Mg(OH)₂ est diluée, l'eau apportée par la suspension dans l'hydrateur étant ajustée de manière à avoir pendant la réaction d'hydratation une humidité du produit à la sortie de l'hydrateur inférieure à 4 %. L'hydratation se fait en continu. Compte-tenu de sa faible humidité, le produit qui sort de l'hydrateur ne nécessite aucune étape de séchage. En revanche, sa granulométrie est contrôlée. Pour cela, il passe par les mêmes étapes de séparation granulométrique que celles subies par la chaux hydratée de grade A présentée dans l'exemple 1, afin d'obtenir un grade granulométrique fin adapté à la préparation de compositions telles que décrites dans l'invention. Cette charge présente un d₅₀ de 5,1 µm, un d₉₀ de 30,1 µm et un d₉₇ de 111,0 µm, tels que mesurés d'après la méthode de granulométrie 1 décrite dans le texte et utilisée pour la détermination des valeurs présentées pour les charges des Tableaux 1 et 2.

Pendant la synthèse, le Mg(OH)₂ ne subit aucune modification. Comme le Mg(OH)₂ est incorporé en continu au court de la réaction d'hydratation de la chaux vive, ce procédé permet l'obtention d'un mélange intime de Mg(OH)₂ et de Ca(OH)₂.

De la même manière que dans l'exemple 5, cette charge est incorporée dans le MDPE à hauteur de 50 % en poids et les compositions ainsi préparées sont caractérisées, tout comme les résidus de combustion.

Les résultats des tests au feu par cône calorimétrie sont représentés à la Figure 8 et sont tout à fait comparables à ceux de la composition de l'exemple 5.

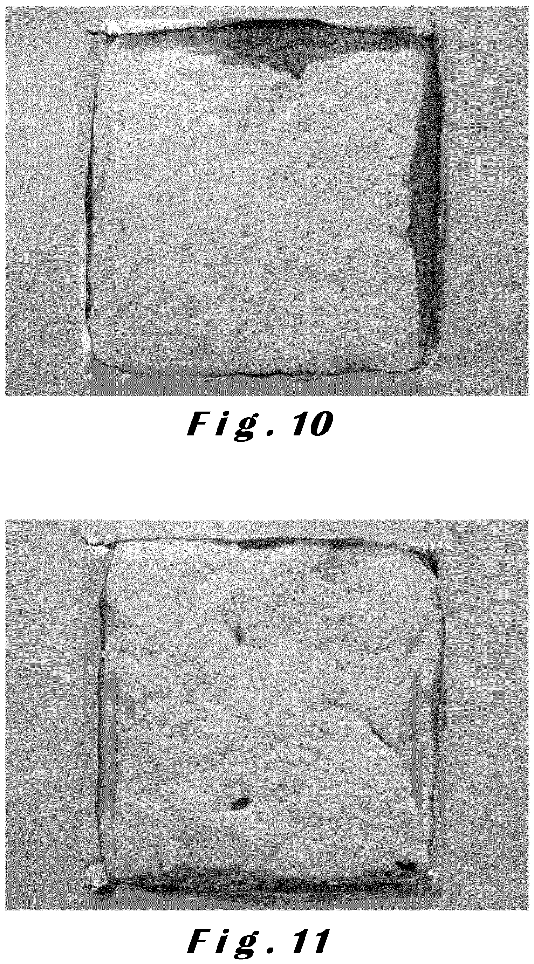

L'observation du résidu de combustion montré à la Figure 10 et caractérisé au Tableau 3 permet de dire qu'à l'issue de sa combustion, la composition de cet exemple a mené à la formation d'un résidu cohésif en comparaison du résidu obtenu pour une composition comparable à base de MDPE et de MDH (Figures 18A et 18B). Ce résidu ne comporte aucune fissure transverse ni aucune fissure profonde.

### Exemple 7.- Utilisation en tant que charge retardatrice de flamme d'une charge minérale, composée de Ca(OH)₂ et de Mg(OH)₂ intimement liés, traitée en surface dans une composition polymère de MDPE.

L'exemple 7 est tout à fait similaire à l'exemple 6 à la seule différence près que la charge de laboratoire n°1 est remplacée par une charge de laboratoire n°2. Cette nouvelle charge de laboratoire est obtenue par le même procédé que celui décrit à l'exemple 6, à ceci près que cette fois, du stéarate de calcium est ajouté dans la suspension de Mg(OH)₂ qui sert à l'hydratation de la chaux vive. Le ratio Ca/Mg est gardé équivalent à celui de l'exemple 6 (environ 22 % de Mg(OH)₂ dans le produit final, le reste étant Ca(OH)₂, CaCO₃ et des impuretés). La quantité de stéarate est ajoutée de manière à avoir environ 4 % de stéarate de calcium par rapport à la masse de la charge minérale mixte à base de Ca et de Mg obtenue à l'issue de la synthèse. Cette charge présente un d₅₀ de 6,0 µm, un d₉₀ de 69,6 µm et un d₉₇ de 146,8 µm, tels que mesurés d'après la méthode de granulométrie 1 décrite dans le texte et utilisée pour la détermination des valeurs présentées pour les charges des Tableaux 1 et 2.

L'ajout du stéarate de calcium in situ pendant la réaction de préparation de la charge mixte Ca-Mg a pour but de favoriser le contact de la charge ainsi synthétisée avec les matrices polymères. Comme dans l'exemple 6, cette charge est incorporée dans une matrice de MDPE.

Les résultats de cône calorimétrie pour cette composition sont illustrés sur la Figure 8. Logiquement, l'ajout de stéarate de calcium à la charge ne modifie en rien ses propriétés retardatrices de flamme. Les propriétés mécaniques de la composition (élongation à la rupture, résilience), non présentées ici, ont été améliorées en comparaison de celles de la composition de l'exemple 6, du fait de l'ajout du stéarate de calcium.

Le résidu de combustion est présenté à la Figure 11. Il est tout à fait comparable à celui présenté pour l'exemple 6 à la Figure 10.

### Exemple 8.- Utilisation en tant que charge retardatrice de flamme d'une dolomie semi-hydratée de grade granulométrique fin dans une composition polymère d'EVA.

La composition de cet exemple est comparable à celle de l'exemple 1, mais cette fois, la charge minérale n'est plus une chaux hydratée, mais une dolomie semi-hydratée. Le grade granulométrique de cette charge dolomitique est comparable au grade granulométrique fin, appelé grade A, de la chaux hydratée, voire même plus fin encore. La dolomie semi-hydratée de la composition de cet exemple est présentée dans le Tableau 1. La matrice polymère est l'EVA 328 comme dans l'exemple 1 et le taux de charge dans cette matrice est de 60 % en poids.

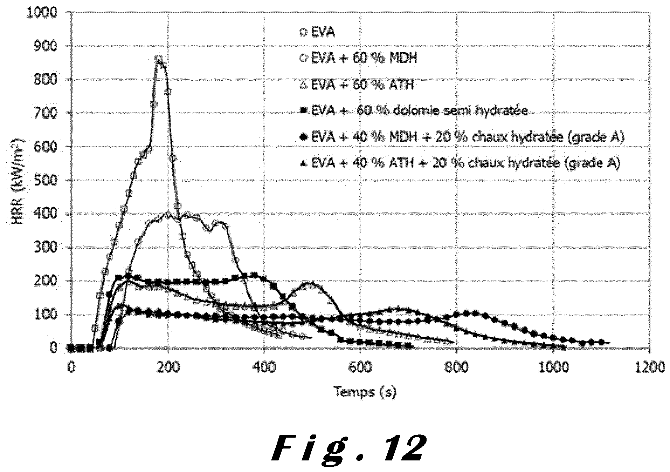

Les résultats des tests au feu par cône calorimétrie sont représentés à la Figure 12 et sont comparables aux résultats obtenus pour la composition de l'exemple 1.

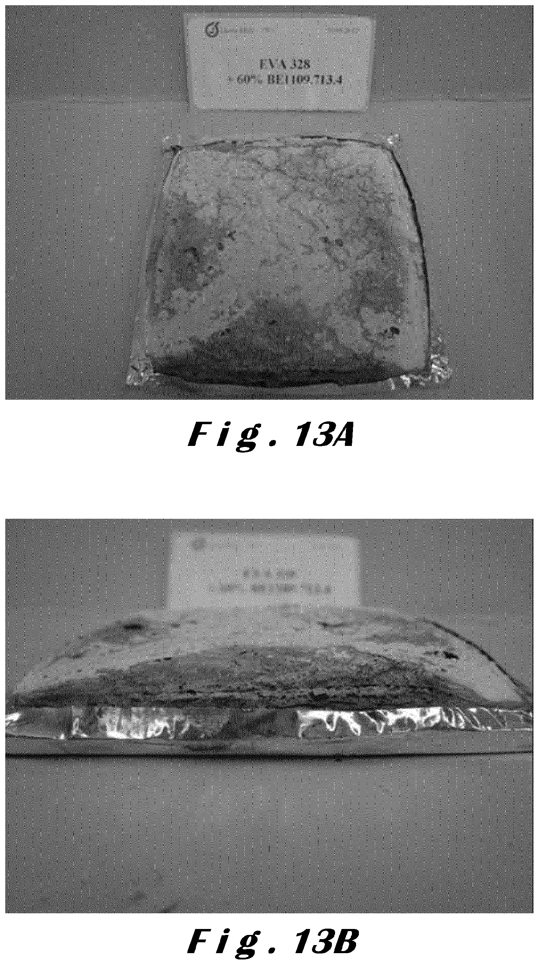

L'observation des résidus de combustion montrés aux Figures 13A et 13B et caractérisés au Tableau 3 permet de dire qu'à l'issue de sa combustion, la composition de cet exemple a mené à la formation d'un résidu cohésif en comparaison des résidus obtenus pour les compositions à base de MDH ou d'ATH dont les résidus s'apparentent à une poudre ou à une cendre (Figures 16A et 16B dans le cas du MDH et 17A et 17B dans le cas de l'ATH). Le résidu se présente en effet sous la forme d'une couche unique et non fissurée, pas même en surface. Par ailleurs, la mesure de la résistance mécanique du résidu conduit à une valeur moyenne (sur 3 mesures réalisées sur des prélèvements effectués à différents endroits dans le résidu de combustion) élevée de 206 kPa, les trois valeurs mesurées étant 162 kPa, 195 kPa et 260 kPa. Ces résultats indiquent que la présence de Mg dans la charge minérale n'altère pas son effet de résistance au feu.

### Exemple 9.- Utilisation en tant que charge retardatrice de flamme d'une charge minérale composée de chaux hydratée de grade granulométrique fin et de MDH en mélange dans une composition polymère d'EVA.

La composition de cet exemple est une composition à base d'EVA 328 comme dans les exemples 1 à 3 et 8 ci-dessus, dans laquelle la charge minérale est un mélange de deux poudres. Comme dans les exemples précédents à base d'EVA, la charge minérale est incorporée à hauteur de 60 % du poids total de la composition, mais cette charge est un mélange de 40 % en poids de MDH (Albemarle Magnifin H10 décrit dans le Tableau 2) et de 20 % en poids de chaux hydratée de grade granulométrique A telle qu'utilisée dans la plupart des exemples ci-dessus et dont les propriétés sont reprises dans le Tableau 1, ces pourcentages étant exprimés par rapport au poids total de la composition. Le mélange de ces deux poudres est réalisé manuellement, avant introduction dans le doseur gravimétrique qui permet de contrôler le taux de charge minérale dans la composition au moment de la préparation de la composition, qui se fait en suivant la méthode décrite dans l'exemple 1.

Les résultats des tests au feu sont comparés à ceux obtenus pour le polymère hôte non chargé (EVA) et pour le même polymère, chargé dans les mêmes conditions et avec 60 % de MDH à la Figure 12.

Les résultats obtenus au cône calorimètre pour cette composition indiquent que le mélange 40 % MDH + 20 % de chaux hydratée est un retardateur de flamme nettement meilleur dans l'EVA que le MDH seul. La courbe de HRR en fonction du temps est très nettement plus faible et étalée dans le temps. Cette amélioration est probablement liée au fait que Mg(OH)₂ et donc le MDH est soluble dans l'acide acétique qui se dégage lors de la combustion de l'EVA de cette composition, contrairement à Ca(OH)2 qui ne l'est pas.

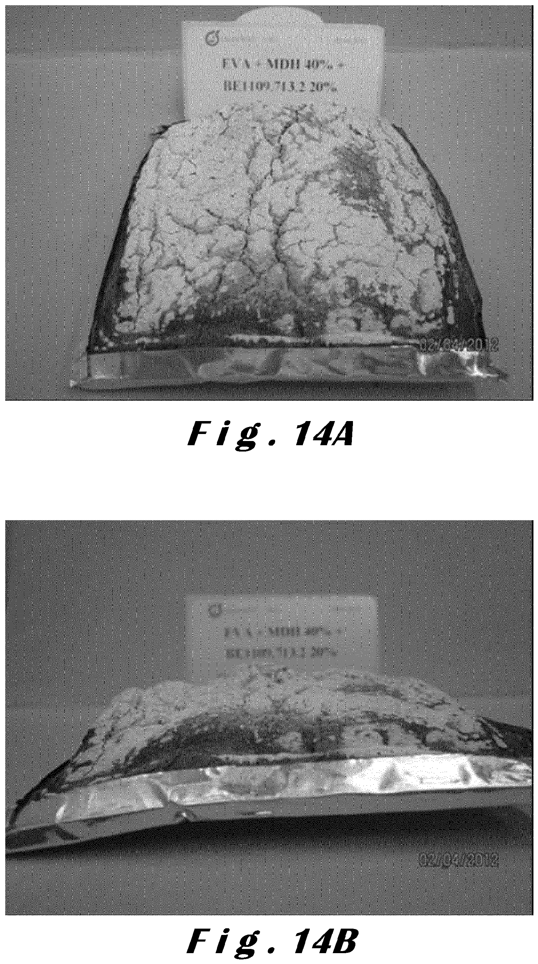

L'observation des résidus de combustion montrés aux Figures 14A et 14B et caractérisés au Tableau 3 permet de conclure qu'à l'issue de sa combustion, la composition de cet exemple a mené à la formation d'un résidu cohésif très différent de celui obtenu pour l'EVA chargé uniquement avec du MDH (Figures 16A et 16B). En effet, le résidu obtenu pour la composition de cet exemple n'est pas noir et se présente sous la forme d'une croûte cohésive et gonflée. Sur ce résidu apparaissent 1 à 2 fissures transverses mais qui ne sont pas profondes. La mesure de la résistance mécanique du résidu conduit à une valeur moyenne (sur 3 mesures réalisées sur des prélèvements effectués à différents endroits dans le résidu de combustion) de 33 kPa, les trois valeurs mesurées étant 14 kPa, 33 kPa et 53 kPa. Si cette valeur est peu élevée, elle est toutefois nettement plus élevée que dans le cas d'une composition d'EVA 328 à base de 60 % de MDH seul, pour laquelle la mesure de la résistance mécanique du résidu de combustion n'est même pas réalisable, aucun échantillon de dimensions suffisantes pour cette mesure ne pouvant y être prélevé.

### Exemple 10.- Utilisation en tant que charge retardatrice de flamme d'une charge minérale composée de chaux hydratée de grade granulométrique fin et d'ATH en mélange dans une composition polymère d'EVA.

Cet exemple est similaire à l'exemple 9 ci-dessus, la charge minérale incorporée dans l'EVA 328 étant toujours un mélange de charges. Néanmoins, cette fois, le MDH est remplacé par de l'ATH (Albemarle Martinal OL 107 LEO), la composition contenant de ce fait 40 % en poids d'ATH et 20 % en poids de chaux hydratée de grade granulométrique A, les pourcentages étant toujours exprimés par rapport au poids total de la composition. Les principales propriétés des charges qui constituent ce mélange sont données dans le Tableau 1 pour la chaux hydratée de grade A et dans le Tableau 2 pour l'ATH.

Comme dans l'exemple 9, ce mélange de charges est incorporé dans l'EVA 328 et les compositions ainsi préparées sont caractérisées, tout comme les résidus de combustion.

La Figure 12 montre que cette composition a un effet retardateur de flamme meilleur que celui de l'ATH seul.

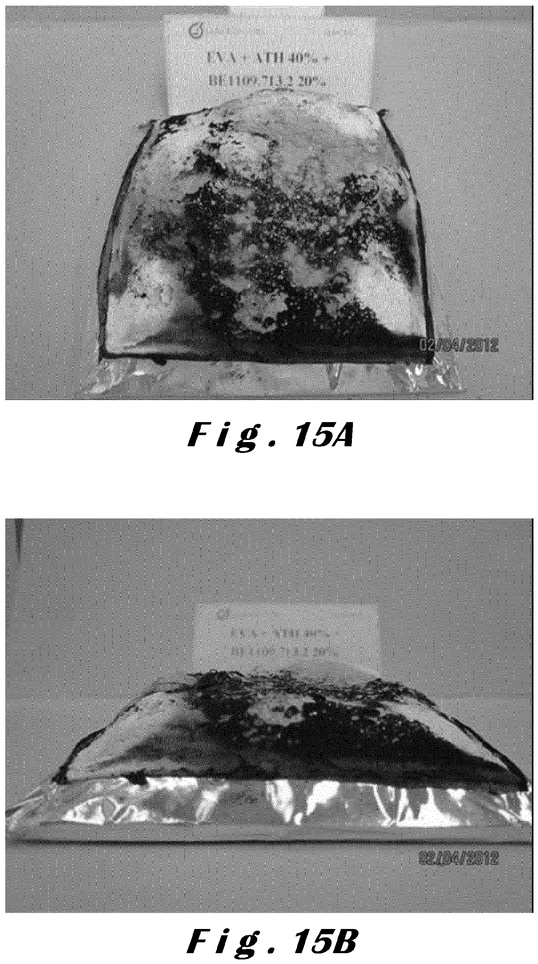

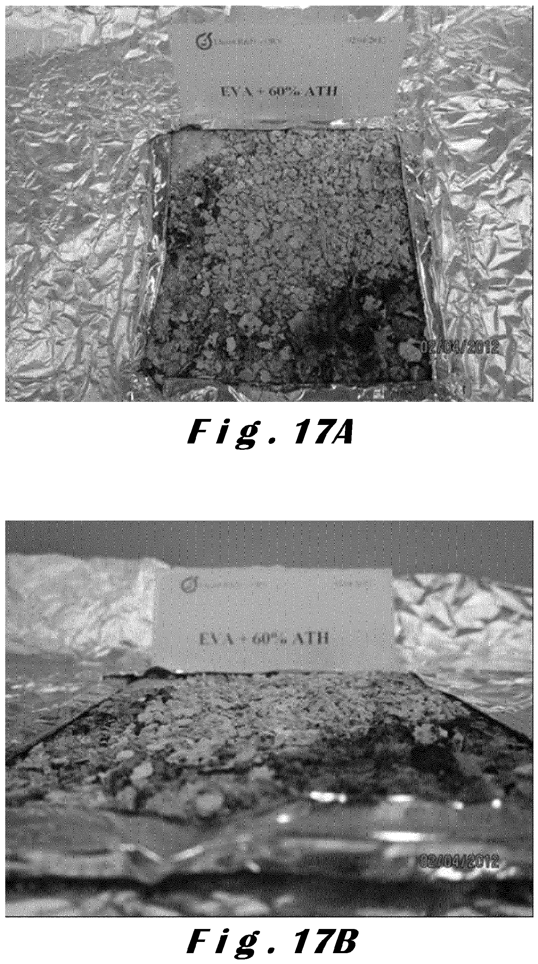

L'observation des résidus de combustion montrés Figures 15A et 15B et caractérisés au Tableau 3 permet de conclure qu'à l'issue de sa combustion, la composition de cet exemple a mené à la formation d'un résidu cohésif, au contraire d'une composition d'EVA 328 contenant 60 % d'ATH uniquement et qui conduit à la formation d'un résidu pulvérulent (Figures 17A et 17B). Ce résidu cohésif est nettement plus noir que la plupart des résidus obtenus pour les compositions des autres exemples. La mesure de la résistance mécanique du résidu conduit à une valeur moyenne (sur 3 mesures réalisées sur des prélèvements effectués à différents endroits dans le résidu de combustion) de 29 kPa, les trois valeurs mesurées étant 17 kPa, 34 kPa et 37 kPa.

### Exemple comparatif 1.- Utilisation en tant que charge retardatrice de flamme de MDH dans une composition polymère d'EVA 328.

Dans cet exemple comparatif, la matrice polymère est l'EVA 328, comme cela est le cas également dans les exemples 1 à 3 et 8 à 10 ci-dessus. Cette fois, cette matrice est chargée, en suivant le procédé décrit dans l'exemple 1, avec 60 % en poids de MDH (Albemarle Magnifin H10) dont les propriétés principales sont données dans le Tableau 2.

Le résidu obtenu avec cette composition à l'issue du test de cône calorimétrie est complètement noir et n'a aucune cohésion comme le montrent les Figures 16A et 16B. Il se présente sous la forme d'une cendre. Par ailleurs, il n'est pas possible d'appliquer la mesure de résistance mécanique telle que décrite dans le texte et sur la Figure 1, à ce résidu, aucun échantillon ayant une dimension suffisante pour cette mesure ne pouvant être prélevé.

### Exemple comparatif 2.- Utilisation en tant que charge retardatrice de flamme d'ATH dans une composition polymère d'EVA 328.

Cet exemple comparatif est similaire à l'exemple comparatif 1, avec toutefois le remplacement des 60 % de MDH par 60 % d'ATH (Albemarle Martinal OL 107 LEO, Tableau 2) dans la matrice d'EVA 328.

Comme dans l'exemple comparatif 1, le résidu obtenu avec cette composition à l'issue du test de cône calorimétrie n'a aucune cohésion comme le montrent les Figures 17A et 17B. Il se présente sous la forme d'une cendre. Par ailleurs, il n'est pas possible d'appliquer la mesure de résistance mécanique telle que décrite dans le texte et sur la Figure 1, à ce résidu, aucun échantillon ayant une dimension suffisante pour cette mesure ne pouvant être prélevé.

### Exemple comparatif 3.- Utilisation en tant que charge retardatrice de flamme de MDH dans une composition polymère de MDPE.

Dans cet exemple comparatif, la matrice polymère est le même MDPE que dans l'exemple 5 ci-dessus. Cette fois, cette matrice est chargée, en suivant le procédé décrit dans l'exemple 5, avec 50 % en poids de MDH (Albemarle Magnifin H10) dont les propriétés principales sont données dans le Tableau 2.

Le résidu obtenu avec cette composition à l'issue du test de cône calorimétrie est présenté sur les Figures 18A et 18B. Il n'a aucune cohésion et se présente sous la forme d'une cendre. Par ailleurs, il n'est pas possible d'appliquer la mesure de résistance mécanique telle que décrite dans le texte et sur la Figure 1, à ce résidu, aucun échantillon ayant une dimension suffisante pour cette mesure ne pouvant être prélevé.

### Exemple comparatif 4.- Utilisation en tant que charge retardatrice de flamme de MDH dans une composition polymère de MDPE, en présence d'un agent céramisant.

Cet exemple comparatif est similaire à l'exemple comparatif 3, mais cette fois, les 50 % de MDH ont été remplacé par un mélange composé de 45 % de MDH et de 5 % d'une argile, plus exactement de la montmorillonite modifiée (Cloisite 30B, Rockwood Specialties Inc.), ces pourcentages étant exprimés par rapport à la masse totale de la composition. Les nano-argiles, en particulier cette cloisite, sont connues pour permettre la formation d'un résidu cohésif par un effet de synergie entre ces charges et les retardateurs de flamme (ici le MDH). Cet effet céramisant est valable dans l'EVA 328, ou une composition d'EVA 328 contenant 55 % de MDH et 5 % de cloisite conduit à l'issue de la combustion à un résidu très cohésif (non illustré ici). En revanche, dans le MDPE, la substitution d'une partie du MDH par de la cloisite semble sans effet, le résidu de combustion présenté aux Figures 19A et 19B et correspondant à la composition avec la cloisite étant tout à fait identique au résidu de combustion obtenu pour la même matrice chargée avec le même MDH mais sans cloisite (Figures 18A et 18B).

### Exemple comparatif 5.- Utilisation en tant que charge retardatrice de flamme de MDH dans une composition polymère de Polystyrène.

Dans cet exemple comparatif, la matrice polymère est le même polystyrène que dans l'exemple 4 ci-dessus. Cette fois, cette matrice est chargée avec 50 % en poids de MDH (Albemarle Magnifin H10) dont les propriétés principales sont données dans le Tableau 2.

Le résidu obtenu avec cette composition à l'issue du test de cône calorimétrie est présenté sur les Figures 20A et 20B. Il n'a aucune cohésion et se présente sous la forme d'une cendre. Par ailleurs, il n'est pas possible d'appliquer la mesure de résistance mécanique telle que décrite dans le texte et sur la Figure 1, à ce résidu, aucun échantillon ayant une dimension suffisante pour cette mesure ne pouvant être prélevé.

### Exemple comparatif 6.- Utilisation en tant que charge retardatrice de flamme d'ATH dans une composition polymère de polystyrène.

Cet exemple comparatif est similaire à l'exemple comparatif 5, avec toutefois le remplacement des 50 % de MDH par 50 % d'ATH (Albemarle Martinal OL 107 LEO, Tableau 2) dans la matrice de PS.

Comme dans l'exemple comparatif 1, le résidu obtenu avec cette composition à l'issue du test de cône calorimétrie n'a aucune cohésion comme le montrent les Figures 21A et 21B. Il se présente sous la forme d'une cendre. Par ailleurs, il n'est pas possible d'appliquer la mesure de résistance mécanique telle que décrite dans le texte et sur la Figure 1, à ce résidu, aucun échantillon ayant une dimension suffisante pour cette mesure ne pouvant être prélevé.

| **Tableau 1** | Chaux hydratée standard grade A (ex 1, 4, 9 et 10) | Chaux hydratée standard grade B (ex 2) | Chaux hydratée de faible surface spécifique (ex 3) | Dolomie semi-hydratée (ex 8) |
|---|---|---|---|---|
| Ca(OH)₂ (% mass.) | 92,8 | 94,3 | 96,4 | 55,3 |
| CaCO₃ (% mass.) | 5,9 | 4,2 | 1,5 | 4,8 |
| Mg(OH)₂⁽¹⁾ (% mass.) | - | - | - | 11,1 |
| MgO⁽¹⁾ (% mass.) | - | - | - | 24,6 |
| CaO (% mass.) | 0,02 | 0,13 | 0,20 | 1,8 |
| Ca/Mg (mol)⁽¹⁾ | - | - | - | |
| Somme impuretés⁽²⁾ (% mass.) | 1,26 | 1,37 | 1,68 | 2,45 |
| Fe₂O₃ (% mass.) | 0,13 | 0,19 | 0,24 | 0,45 |
| Humidité 150 °C (% mass.) | 0,7 | 1,1 | 0,5 | 0,8 |
| Surface BET (m²/g) | 14,8 | 15,8 | 7,5 | 11,3 |
| Granulométrie 1⁽³⁾ | | | | |
| d₃ (µm) | 0,8 | 0,8 | 0,8 | 0,6 |
| d₁₀ (µm) | 1,2 | 1,5 | 1,7 | 1,1 |
| d₅₀ (µm) | 2,9 | 5,1 | 7,4 | 3,2 |
| d₉₀ (µm) | 6,2 | 39,8 | 99,7 | 7,4 |
| d₉₇ (µm) | 33,0 | 92,1 | 161,2 | 9,8 |
| d₁₀₀ (µm) | 309,6 | 309,6 | 309,6 | 76,4 |
| Granulométrie 2 ⁽⁴⁾ | | | | |
| d₃ (µm) | 0,7 | 0,7 | 0,7 | 0,5 |
| d₁₀ (µm) | 1,1 | 1,3 | 1,1 | 0,9 |
| d₅₀ (µm) | 3,2 | 3,9 | 3,5 | 2,7 |
| d₉₀ (µm) | 8,9 | 9,8 | 8,9 | 6,2 |
| d₉₇ (µm) | 14,3 | 17,2 | 11,2 | 7,4 |
| d₁₀₀ (µm) | 39,8 | 43,7 | 43,7 | 11,8 |
| T décomposition Mg(OH)₂(°C)⁽¹⁾ | - | - | - | 250-420 |
| T décomposition Ca(OH)₂ (°C) | 400-550 | 400-580 | 400-610 | 420-580 |
| T 95% (°C) | 455 | 470 | 477 | 443 |

| | | | | |
|---|---|---|---|---|
| ⁽¹⁾ : applicable uniquement pour les dolomies ⁽²⁾ : MgO + SiO₂ + Al₂O₃ + Fe₂O₃ + MnO + P₂O₅ + K₂O + SO₃ pour les chaux, SiO₂ + Al₂O₃ + Fe₂O₃ + MnO + P₂O₅ + K₂O + SO₃ dans le cas des dolomies ⁽³⁾ : mesure de la taille des agglomérats par granulométrie laser sur la poudre non désagglomérée ⁽⁴⁾ : mesure de la taille des agrégats par granulométrie laser sur la poudre désagglomérée par ultrasons | | | | |

| **Tableau 2** | ATH (exemple 10 et comparatifs 2 et 6) | MDH (exemple 9 et comparatifs 1 et 3 à 5) |
|---|---|---|
| Al(OH)₃ (% mass.) | 99,8 | - |
| Mg(OH)₂ (% mass.) | - | 100,0 |
| Somme impuretés⁽¹⁾ (% mass.) | 0,19 | 0,03 |
| Surface BET (m²/g) | 5,3 | 9,5 |
| Volume poreux (cm³/g) | 0,017 | 0,029 |

| Granulométrie 1⁽²⁾ | | |
|---|---|---|
| d₃ (µm) | 0,6 | 0,5 |
| d₁₀ (µm) | 0,9 | 0,7 |
| d₅₀ (µm) | 1,8 | 1,7 |
| d₉₀ (µm) | 3,5 | 25,0 |
| d₉₇ (µm) | 4,4 | 52,6 |
| d₁₀₀ (µm) | 7,4 | 83,9 |

| Granulométrie 2⁽³⁾ | | |
|---|---|---|
| d₃ (µm) | 0,7 | 0,4 |
| d₁₀ (µm) | 1,0 | 0,6 |
| d₅₀ (µm) | 2,0 | 1,1 |
| d₉₀ (µm) | 3,5 | 1,7 |
| d₉₇ (µm) | 4,2 | 2,0 |
| d₁₀₀ (µm) | 6,8 | 2,9 |
| T décomposition hydroxyde (°C) | 210-550 | 340-550 |
| T 95% (°C) | 301 | 413 |

| | | |
|---|---|---|
| ⁽¹⁾ : SiO₂ + CaO + Fe₂O₃ + Na₂O + SO₃ + Cl ⁽²⁾ : mesure de la taille des agglomérats par granulométrie laser sur la poudre non désagglomérée ⁽³⁾ : mesure de la taille des agrégats par granulométrie laser sur la poudre désagglomérée par ultrasons | | |

| **Tableau 3** N° exemple | 1 | 2 | 3 | 4 | 5 | 6 | 7 | 8 | 9 | 10 |
|---|---|---|---|---|---|---|---|---|---|---|
| Nombre de fissures transverses | 0 | 0 | 0 | 2 | 1 | 0 | 0 | 0 | 1-2 | 0 |
| Fissures profondes | - | - | - | oui | non | - | - | - | non | - |
| Taille maximale d'un prélèvement (mm)⁽¹⁾ | - | - | - | 30 | 30 | - | - | - | - | - |
| Résistance mécanique moyenne (kPa) | 125 | 134 | 32 | 98 | 17 | ND | ND | 206 | 33 | 29 |
| Résistance mécanique minimale (kPa) | 111 | 120 | 26 | 67 | 11 | ND | ND | 162 | 14 | 17 |
| Résistance mécanique maximale (kPa) | 143 | 157 | 37 | 123 | 20 | ND | ND | 260 | 53 | 37 |

| | | | | | | | | | | |
|---|---|---|---|---|---|---|---|---|---|---|
| ⁽¹⁾ taille maximale de l'échantillon (échantillon faisant toute l'épaisseur du résidu et dont la section est assimilée à un carré) qui peut être prélevé sans être cassé dans le résidu obtenu à l'issue du test de cône calorimétrie qui mesure 100 mm de côté. ND : la résistance mécanique en compression des résidus de combustion n'a pas été mesurée (non disponible) | | | | | | | | | | |

## Revendications

1. Utilisation, dans une composition polymère organique ignifugée, d'une charge minérale comprenant un composé calcique comprenant au moins de l'hydroxyde de calcium pour conférer à cette composition polymère organique ignifugée, simultanément à un effet retardateur de flamme, un effet de résistance au feu par lequel un résidu de combustion de ladite composition polymère organique ignifugée est cohésif..

2. Utilisation selon la revendication 1 dans laquelle ledit hydroxyde de calcium est de la chaux hydratée également appelée chaux éteinte, sous forme pulvérulente.

3. Utilisation selon la revendication 1 ou la revendication 2, dans laquelle ledit hydroxyde de calcium comporte des particules présentant une taille de particules mesurée par granulométrie laser après dispersion dans du méthanol d₉₀ inférieur ou égal à 100 µm, en particulier inférieur à 60 µm, avantageusement inférieur ou égal à 30 µm et en particulier inférieur ou égal à 10 µm.

4. Utilisation selon l'une quelconque des revendications 1 à 3, dans laquelle les particules d'hydroxyde de calcium présentent une taille de particules mesurée par granulométrie laser après dispersion dans du méthanol d₉₇ inférieur ou égal à 200 µm, avantageusement inférieur ou égal à 100 µm et en particulier inférieur ou égal à 50 µm.

5. Utilisation selon l'une quelconque des revendications 1 à 4, dans laquelle ladite charge minérale comprend en outre au moins un composé magnésien, sous forme d'un hydroxyde de magnésium, en tant qu'additif retardateur de flamme.

6. Utilisation selon la revendication 5, dans laquelle le composé calcique et le composé magnésien sont deux composés séparés en mélange.

7. Utilisation selon la revendication 5, dans laquelle le composé calcique et le composé magnésien de ladite charge minérale sont intimement liés et proviennent d'une extinction d'une chaux vive avec une suspension d'hydroxyde de magnésium.

8. Utilisation selon la revendication 5, dans laquelle le composé calcique et le composé magnésien sont intimement liés et proviennent d'une extinction totale ou partielle d'une dolomie vive.

9. Utilisation selon la revendication 8, dans laquelle ledit composé calcique et ledit composé magnésien intimement liés forment une dolomie semi-hydratée de formule générale aCaCO₃.bCa(OH)₂.cMg(OH)₂.dMgO.eCaO, a,b,c,d et e étant des fractions molaires avec (a + b + e)/(c + d) étant compris entre 0,8 et 1,2 et présentant des valeurs telles que :
- b représente la fraction molaire correspondant à une proportion en poids supérieure ou égale à 15 % et inférieure ou égale à 69%, en particulier de 30 à 65 %, de préférence de 40 à 60 % et de manière particulièrement avantageuse de 45 à 55 %,
- c représente la fraction molaire correspondant à une proportion en poids supérieure ou égale à 1 % , an particulier de 2 à 51 %, de préférence de 3 à 40 %, en particulier de 6 à 30 %, de préférence de 8 à 25 % et de manière particulièrement avantageuse de 10 à 20 %,
- d représente la fraction molaire correspondant à une proportion en poids supérieure ou égale à 1 %, de préférence supérieure à 2 %, avantageusement supérieure à 5 % et de manière particulièrement avantageuse supérieure à 15 %, en particulier supérieure à 20% et généralement inférieure à 41 %, en particulier inférieure à 30%,
- a représente la fraction molaire correspondant à une proportion en poids supérieure ou égale à 0 %, en particulier de 1 à 20 %, de préférence inférieure à 18 %, en particulier < 10 %, de préférence < à 8 % et de manière particulièrement avantageuse < 6 %,
- e représente la fraction molaire correspondant à une proportion en poids supérieure à 0 % et inférieure à 15%, de préférence inférieure à 10%, en particulier à 5 %, de préférence inférieure à 3 % et de manière particulièrement avantageuse < 2 %.

10. Utilisation selon la revendication 9, dans laquelle ladite dolomie semi-hydratée comprend des agglomérats d'agrégats de particules.

11. Utilisation selon la revendication 8, dans laquelle ledit composé calcique et ledit composé magnésien intimement liés forment une dolomie totalement hydratée de formule générale aCaCO₃.bCa(OH)₂.cMg(OH)₂.dMg.eCaO, a,b,c,d et e étant des fractions molaires avec (a + b + e)/(c + d) étant compris entre 0,8 et 1,2 et présentant des valeurs telles que :
- b représente la fraction molaire correspondant à une proportion en poids de 45 à 57 %, de préférence de supérieure à 50 %,
- c représente la fraction molaire correspondant à une proportion en poids de 35 à 42 %, de préférence supérieure à 37 %,
- d représente la fraction molaire correspondant à une proportion en poids de 0 à 2 %, de préférence inférieure à 1 %,
- a représente la fraction molaire correspondant à une proportion en poids supérieure ou égale à 0 %, en particulier de 1 à 10 %, de préférence inférieure à 5 %,
- e représente la fraction molaire correspondant à une proportion en poids de 0 à 3 % de préférence inférieure à 1 %.

12. Utilisation selon la revendication 11, dans laquelle ladite dolomie totalement hydratée comprend des agglomérats d'agrégats de particules.

13. Utilisation selon la revendication 11 ou 12, dans laquelle ladite dolomie hydratée est sous forme pulvérulente et présentent des particules dont la taille est inférieure à 1 mm et de préférence inférieure à 250 µm.

14. Utilisation selon l'une quelconque des revendications 8 à 13, dans laquelle les particules de dolomie, hydratée ou semi-hydratée, présentent une taille de particules mesurée par granulométrie laser après dispersion dans du méthanol d₉₀ inférieur ou égal à 60 µm, avantageusement inférieur ou égal à 30 µm et en particulier inférieur ou égal à 10 µm.

15. Utilisation selon l'une quelconque des revendications 8 à 14, dans laquelle les particules de dolomie, hydratée ou semi-hydratée, présentent une taille de particules mesurée par granulométrie laser après dispersion dans du méthanol d₉₇ inférieur ou égal à 200 µm, avantageusement inférieur ou égal à 100 µm et en particulier inférieur ou égal à 50 µm.

16. Utilisation selon l'une quelconque des revendications précédentes, dans laquelle ladite composition polymère organique ignifugée comprend un polymère de type thermoplastique, thermodurcissable ou élastomère, d'origine naturelle ou synthétique.

17. Utilisation selon l'une quelconque des revendications précédentes, dans laquelle ledit polymère organique est choisi dans le groupe constitué des polyéthylènes, des polypropylènes, des polystyrènes, des copolymères d'éthylène et de propylène (EPR), des terpolymères-éthylène-propylènediène (EPDM), des copolymères d'éthylène et d'acétate de vinyle (EVA) à faible/moyenne teneur en acétate, des copolymères d'éthylène et d'acrylate de méthyle (EMA) à faible/moyenne teneur en acrylate, des copolymères d'éthylène et d'acrylate d'éthyle (EEA) à faible teneur en acrylate, des copolymères d'éthylène et d'acrylate de butyle (EBA) à faible teneur en acrylate, des copolymères d'éthylène et d'octène, des polymères à base d'éthylène, des polymères à base de polypropylène, des polymères à base de polystyrène, des polymères halogénés, ou un quelconque mélange de ces composés.

18. Utilisation selon l'une quelconque des revendications précédentes, dans laquelle la charge minérale est incorporée dans la composition polymère ignifugée à hauteur de 1 à 80 % en poids, avantageusement de 40 à 75 % en poids, par rapport au poids total de ladite composition polymère ignifugée.

19. Utilisation selon l'une quelconque des revendications précédentes pour former des fils de composition polymère ignifugée.

20. Utilisation selon l'une quelconque des revendications précédentes pour former des granulés de composition polymère ignifugée.

21. Utilisation selon l'une quelconque des revendications précédentes pour former des gaines de composition polymère ignifugée.

22. Utilisation selon l'une quelconque des revendications précédentes, dans laquelle ledit résidu de combustion de ladite composition polymère ignifugée est un résidu cohésif présentant une résistance mécanique à la rupture en compression moyenne qui est supérieure à 3 kPa, de préférence supérieure à 8 kPa, de manière préférentielle supérieure à 20 kPa et de manière particulièrement avantageuse supérieure à 60 kPa.

23. Utilisation selon l'une quelconque des revendications précédentes, dans laquelle ledit résidu de combustion n'est traversé que par un nombre de fissures très limité, inférieur ou égal à 3, de préférence inférieur ou égal à 2, voire à 1 et de manière particulièrement préférentielle nul, après combustion selon la méthode normalisée du cône calorimètre ISO 5660-1 ou ASTM E 1354.

24. Utilisation selon l'une quelconque des revendications précédentes, dans laquelle ledit résidu de combustion présente, après combustion selon la méthode normalisée du cône calorimètre ISO 5660-1 ou ASTM E 1354, une taille maximale de résidu de combustion dont la section est assimilée à un carré pouvant être prélevé sans être cassé dans ledit résidu obtenu supérieure ou égale à 10 mm, de préférence supérieure ou égale à 30 mm, de préférence supérieure ou égale à 50 mm, à partir d'un échantillon avant combustion de section carrée de 100 mm.

## Patentansprüche

1. Verwendung, in einer flammenfesten organischen Polymerzusammensetzung, eines mineralischen Füllstoffs, welcher eine Kalkverbindung umfasst, die zumindest Calciumhydroxid umfasst, um dieser flammenfesten organischen Polymerzusammensetzung, zugleich mit einer flammverzögernden Wirkung, eine feuerbeständige Wirkung zu verleihen, durch die ein Verbrennungsrückstand der flammenfesten organischen Polymerzusammensetzung kohäsiv ist.

2. Verwendung nach Anspruch 1, wobei das Calciumhydroxid Löschkalk, auch gelöschter Kalk genannt, in Pulverform ist.

3. Verwendung nach Anspruch 1 oder Anspruch 2, wobei das Calciumhydroxid Partikel enthält, welche eine Partikelgröße, gemessen durch Laserbeugungs-Partikelgrößenanalyse nach Dispersion in Methanol d₉₀, von weniger als oder gleich 100 µm aufweisen, insbesondere weniger als 60 µm, vorteilhafterweise weniger als oder gleich 30 µm und insbesondere weniger als oder gleich 10 µm.

4. Verwendung nach irgendeinem der Ansprüche 1 bis 3, wobei die Partikel des Calciumhydroxids eine Partikelgröße, gemessen durch Laserbeugungs-Partikelgrößenanalyse nach Dispersion in Methanol d₉₇, von weniger als oder gleich 200 µm aufweisen, vorteilhafterweise weniger als oder gleich 100 µm und insbesondere weniger als oder gleich 50 µm.

5. Verwendung nach irgendeinem der Ansprüche 1 bis 4, wobei der mineralische Füllstoff ferner zumindest eine Magnesiumverbindung in Form eines Magnesiumhydroxids als flammverzögernden Zusatz umfasst.

6. Verwendung nach Anspruch 5, wobei die Kalkverbindung und die Magnesiumverbindung zwei in Mischung getrennte Verbindungen sind.

7. Verwendung nach Anspruch 5, wobei die Kalkverbindung und die Magnesiumverbindung des mineralischen Füllstoffs stark gebunden sind und aus dem Löschen von Branntkalk mit einer Magnesiumhydroxidsuspension stammen.

8. Verwendung nach Anspruch 5, wobei die Kalkverbindung und die Magnesiumverbindung stark gebunden sind und aus dem vollständigen oder teilweisen Löschen von Branntdolomit stammen.

9. Verwendung nach Anspruch 8, wobei die Kalkverbindung und die Magnesiumverbindung, die stark gebunden sind, einen halb-gelöschten Dolomit der allgemeinen Formel aCaCO₃.bCa(OH)₂.cMg(OH)₂.dMgO.eCaO bilden, wobei a, b, c, d und e Stoffmengenanteile sind, mit (a + b + e)/(c + d) zwischen 0,8 und 1,2, und folgende Werte aufweisen:
- b steht für den Stoffmengenanteil entsprechend einem Gewichtsverhältnis von mehr als oder gleich 15 % und weniger als oder gleich 69 %, insbesondere von 30 bis 65 %, bevorzugt von 40 bis 60 % und besonders vorteilhafterweise von 45 bis 55 %,
- c steht für den Stoffmengenanteil entsprechend einem Gewichtsverhältnis von mehr als oder gleich 1 %, insbesondere von 2 bis 51 %, bevorzugt von 3 bis 40 %, insbesondere von 6 bis 30 %, bevorzugt von 8 bis 25 % und besonders vorteilhafterweise von 10 bis 20 %,
- d steht für den Stoffmengenanteil entsprechend einem Gewichtsverhältnis von mehr als oder gleich 1 %, bevorzugt mehr als 2 %, vorteilhafterweise mehr als 5 % und besonders vorteilhafterweise mehr als 15 %, insbesondere mehr als 20 % und im Allgemeinen weniger als 41 %, insbesondere weniger als 30 %,
- a steht für den Stoffmengenanteil entsprechend einem Gewichtsverhältnis von mehr als oder gleich 0 %, insbesondere von 1 bis 20 %, bevorzugt weniger als 18 %, insbesondere < 10 %, bevorzugt < als 8 % und besonders vorteilhafterweise < 6 %,
- e steht für den Stoffmengenanteil entsprechend einem Gewichtsverhältnis von mehr als 0 % und weniger als 15 %, bevorzugt weniger als 10 %, insbesondere als 5 %, bevorzugt weniger als 3 % und besonders vorteilhafterweise < 2 %.

10. Verwendung nach Anspruch 9, wobei der halb-gelöschte Dolomit Agglomerate von Partikelaggregaten umfasst.

11. Verwendung nach Anspruch 8, wobei die Kalkverbindung und die Magnesiumverbindung, die stark gebunden sind, einen vollständig gelöschten Dolomit der allgemeinen Formel aCaCO₃.bCa(OH)₂.cMg(OH)₂.dMgO.eCaO bilden, wobei a, b, c, d und e Stoffmengenanteile sind, mit (a + b + e)/(c + d) zwischen 0,8 und 1,2, und folgende Werte aufweisen:
- b steht für den Stoffmengenanteil entsprechend einem Gewichtsverhältnis von 45 bis 57 %, bevorzugt von mehr als 50 %,
- c steht für den Stoffmengenanteil entsprechend einem Gewichtsverhältnis von 35 bis 42 %, bevorzugt mehr als 37 %,
- d steht für den Stoffmengenanteil entsprechend einem Gewichtsverhältnis von 0 bis 2 %, bevorzugt weniger als 1 %,
- a steht für den Stoffmengenanteil entsprechend einem Gewichtsverhältnis von mehr als oder gleich 0 %, insbesondere von 1 bis 10 %, bevorzugt weniger als 5 %,
- e steht für den Stoffmengenanteil entsprechend einem Gewichtsverhältnis von 0 bis 3 %, bevorzugt weniger als 1 %.

12. Verwendung nach Anspruch 11, wobei der vollständig gelöschte Dolomit Agglomerate von Partikelaggregaten umfasst.

13. Verwendung nach Anspruch 11 oder 12, wobei der erwähnte gelöschte Dolomit in Pulverform vorliegt und Partikel aufweist, deren Größe geringer ist als 1 mm und bevorzugt geringer als 250 µm.

14. Verwendung nach irgendeinem der Ansprüche 8 bis 13, wobei die Partikel des gelöschten oder halb-gelöschten Dolomits eine Partikelgröße, gemessen durch Laserbeugungs-Partikelgrößenanalyse nach Dispersion in Methanol d₉₀, von weniger als oder gleich 60 µm aufweisen, vorteilhafterweise weniger als oder gleich 30 µm und insbesondere weniger als oder gleich 10 µm.

15. Verwendung nach irgendeinem der Ansprüche 8 bis 14, wobei die Partikel des gelöschten oder halb-gelöschten Dolomits eine Partikelgröße, gemessen durch Laserbeugungs-Partikelgrößenanalyse nach Dispersion in Methanol d₉₇, von weniger als oder gleich 200 µm aufweisen, vorteilhafterweise weniger als oder gleich 100 µm und insbesondere weniger als oder gleich 50 µm.

16. Verwendung nach irgendeinem der vorigen Ansprüche, wobei die flammenfeste organische Polymerzusammensetzung einen Polymer thermoplastischer, hitzehärtbarer oder elastomerer Art natürlichen oder synthetischen Ursprungs umfasst.

17. Verwendung nach irgendeinem der vorigen Ansprüche, wobei das organische Polymer ausgewählt wird aus der Gruppe bestehend aus Polyethylenen, Polypropylenen, Polystyrolen, Ethylen-Propylen-Copolymeren (EPR), Ethylen-Propylendien-Terpolymeren (EPDM), Ethylen-Vinylacetat-Copolymeren (EVA) mit geringem/mittlerem Acetatanteil, Ethylen-Methylacrylat-Copolymeren (EMA) mit geringem/mittlerem Acrylatanteil, Ethylen-Ethylacrylat-Copolymeren (EEA) mit geringem Acrylatanteil, Ethylen-Butylacrylat-Copolymeren (EBA) mit geringem Acrylatanteil, Ethylen-Octen-Copolymeren, Polymeren auf Basis von Ethylen, Polymeren auf Basis von Polypropylen, Polymeren auf Basis von Polystyrol, halogenierten Polymeren, oder irgendeiner Mischung dieser Verbindungen.

18. Verwendung nach irgendeinem der vorigen Ansprüche, wobei der mineralische Füllstoff im Umfang von 1 bis 80 Gew.-%, vorteilhafterweise von 40 bis 75 Gew.-% im Verhältnis zum Gesamtgewicht der flammenfesten Polymerzusammensetzung, in die flammenfeste Polymerzusammensetzung integriert ist.

19. Verwendung nach irgendeinem der vorigen Ansprüche, um Fäden aus flammenfester Polymerzusammensetzung zu bilden.

20. Verwendung nach irgendeinem der vorigen Ansprüche, um Granulat aus flammenfester Polymerzusammensetzung zu bilden.

21. Verwendung nach irgendeinem der vorigen Ansprüche, um Hülsen aus flammenfester Polymerzusammensetzung zu bilden.

22. Verwendung nach irgendeinem der vorigen Ansprüche, wobei der Verbrennungsrückstand der flammenfesten Polymerzusammensetzung ein kohäsiver Rückstand mit einer mechanischen Bruchfestigkeit bei durchschnittlicher Kompression von mehr als 3 kPa hat, bevorzugt mehr als 8 kPa, vorzugsweise mehr als 20 kPa und besonders vorteilhafterweise mehr als 60 kPa.

23. Verwendung nach irgendeinem der vorigen Ansprüche, wobei der Verbrennungsrückstand, nach Verbrennung nach dem normierten Cone-Calorimeter-Verfahren gemäß ISO 5660-1 oder ASTM E 1354, nur durch eine sehr beschränkte Anzahl von Rissen, weniger als oder gleich 3, bevorzugt weniger als oder gleich 2 bzw. 1 und besonders bevorzugterweise null, durchdrungen wird.

24. Verwendung nach irgendeinem der vorigen Ansprüche, wobei der Verbrennungsrückstand, nach Verbrennung gemäß dem normierten Cone-Calorimeter-Verfahren gemäß ISO 5660-1 oder ASTM E 1354, eine maximale Größe des Verbrennungsrückstands, dessen Querschnitt mit einem Quadrat gleichgestellt ist, das ohne zu zerbrechen aus dem erhaltenen Rückstand entnommen werden kann, von mehr als oder gleich 10 mm aufweist, bevorzugt mehr als oder gleich 30 mm, bevorzugt mehr als oder gleich 50 mm, ausgehend von einer Probe vor der Verbrennung mit einem quadratischen Querschnitt von 100 mm.

## Claims

1. Use, in a flame retardant organic polymer composition, of a mineral filler comprising a calcium compound comprising at least calcium hydroxide to impart to this flame retardant organic polymer composition, simultaneously with a flame retardant effect, a fire resistance effect whereby a combustion residue of said flame retardant organic polymer composition is cohesive.

2. The use according to claim 1 wherein said calcium hydroxide is the hydrated lime also called slaked lime, in powdery form.

3. The use according to claim 1 or claim 2, wherein said calcium hydroxide comprises particles having a particle size measured by laser granulometry after dispersion in methanol d₉₀ less than or equal to 100 µm, in particular less than 60 µm, advantageously less than or equal to 30 µm and in particular less than or equal to 10 µm.

4. The use according to any one of claims 1 to 3, wherein the calcium hydroxide particles have a particle size measured by laser granulometry after dispersion in methanol d₉₇ less than or equal to 200 µm, advantageously less than or equal to 100 µm and in particular less than or equal to 50 µm.

5. The use according to any one of claims 1 to 4, wherein said mineral filler further comprises at least one magnesium compound, in the form of a magnesium hydroxide, as a flame retardant additive.

6. The use according to claim 5, wherein the calcium compound and the magnesium compound are two separate compounds in mixture.

7. The use according to claim 5, wherein the calcium compound and the magnesium compound of said mineral filler are intimately bound and derived from a slaking of quicklime with a suspension of magnesium hydroxide.

8. The use according to claim 5, wherein the calcium compound and the magnesium compound are intimately bound and derived from a total or partial slaking of a dolomite lime.

9. The use according to claim 8, wherein said calcium compound and said magnesium compound that are intimately bound form a semi-hydrated dolomite having the general formula aCaCO₃.bCa(OH)₂.cMg(OH)₂.dMgO.eCaO, a, b, c, d and e being molar fractions with (a + b + e) / (c + d) being between 0.8 and 1.2 and having values such that:
- b represents the molar fraction corresponding to a proportion by weight greater than or equal to 15% and less than or equal to 69%, in particular from 30% to 65%, preferably from 40% to 60% and in a particularly advantageous manner from 45% to 55%,
- c represents the molar fraction corresponding to a proportion by weight greater than or equal to 1%, in particular from 2 to 51%, preferably from 3 to 40%, in particular from 6 to 30%, preferably from 8 to 25%, and in a particularly advantageous manner from 10 to 20%,
- d represents the molar fraction corresponding to a proportion by weight greater than or equal to 1%, preferably greater than 2%, advantageously greater than 5% and in a particularly advantageous manner greater than 15%, in particular greater than 20% and generally less than 41%, in particular less than 30%,
- a represents the molar fraction corresponding to a proportion by weight greater than or equal to 0%, in particular from 1 to 20%, preferably less than 18%, in particular < 10%, preferably < 8%, and in a particularly advantageous manner < 6%,
- e represents the molar fraction corresponding to a proportion by weight greater than 0% and less than 15%, preferably less than 10%, particularly less than 5%, preferably less than 3% and in a particularly advantageous manner < 2%.

10. The use of claim 9, wherein said semi-hydrated dolomite comprises agglomerates of particle aggregates.

11. The use according to claim 8, wherein said calcium compound and said magnesium compound that are intimately bound form a fully hydrated dolomite having the general formula aCaCO₃.bCa(OH)₂.cMg(OH)₂.dMgO.eCaO, a, b, c, d and e being molar fractions with (a + b + e)/(c + d) being between 0.8 and 1.2 and having values such that:
- b represents the molar fraction corresponding to a proportion by weight of 45 to 57%, preferably greater than 50%,
- c represents the molar fraction corresponding to a proportion by weight of 35 to 42%, preferably greater than 37%,
- d represents the molar fraction corresponding to a proportion by weight of 0 to 2%, preferably less than 1%,
- a represents the molar fraction corresponding to a proportion by weight greater than or equal to 0%, in particular from 1 to 10%, preferably less than 5%,
- e represents the molar fraction corresponding to a proportion weight of 0 to 3%, preferably less than 1%.

12. The use according to the claim 11, wherein said fully hydrated dolomite comprises agglomerates of particle aggregates.

13. The use according to claim 11 or 12, wherein said hydrated dolomite is in powdery form and has particles less than 1 mm in size and preferably less than 250 µm.

14. The use according to any one of claims 8 to 13, wherein the dolomite particles, hydrated or semi-hydrated, have a particle size measured by laser granulometry after dispersion in methanol d₉₀ less than or equal to 60 µm, advantageously less than or equal to 30 µm and in particular less than or equal to 10 µm.

15. The use according to any one of claims 8 to 14, wherein the dolomite particles, hydrated or semi-hydrated, have a particle size measured by laser granulometry after dispersion in methanol d₉₇ less than or equal to 200 µm, advantageously less than or equal to 100 µm and in particular less than or equal to 50 µm.

16. The use according to any one of the preceding claims, wherein said flame retardant organic polymeric composition comprises a thermoplastic, thermosetting or elastomer type polymer of natural or synthetic origin.

17. The use according to any one of the preceding claims, wherein said organic polymer is selected from the group consisting of polyethylenes, polypropylenes, polystyrenes, copolymers of ethylene and propylene (EPR), terpolymers of ethylene-propylene diene (EPDM), copolymers of ethylene and vinyl acetate (EVA) having low/medium acetate content, copolymers of ethylene and methyl acrylate (EMA) having low/medium acrylate content, copolymers of ethylene and ethyl acrylate (EEA) having low acrylate content, copolymers of ethylene and butyl acrylate (EBA) having low acrylate content, copolymers of ethylene and octane, ethylene-based polymers, polypropylene-based polymers, polystyrene-based polymers, halogenated polymers, or any mixture of these compounds.

18. The use according to any one of the preceding claims, wherein the mineral filler is incorporated in the flame-retardant polymer composition at the height of 1 to 80% by weight, advantageously from 40 to 75% by weight, in relation to the total weight of said flame retardant polymer composition.

19. The use according to any one of the preceding claims for forming threads of flame retardant polymer composition.

20. The use according to any one of the preceding claims for forming granules of flame retardant polymer composition.

21. The use according to any one of the preceding claims for forming sheaths of flame retardant polymer composition.

22. The use according to any one of the preceding claims, wherein said combustion residue of said flame retardant polymer composition is a cohesive residue having a mechanical strength to breaking in average compression that is greater than 3 kPa, preferably greater than 8 kPa, preferably greater than 20 kPa and in a particularly advantageous manner greater than 60 kPa.

23. The use according to any one of the preceding claims, wherein said combustion residue has only a very limited number of cracks passing across it, which is less than or equal to 3, preferably less than or equal to 2, or even 1 and particularly preferably zero, after combustion according to the standardized method of the calorimeter cone ISO 5660-1 or ASTM E 1354.

24. The use according to any one of the preceding claims, wherein said combustion residue has, after combustion according to the standardized method of the calorimeter cone ISO 5660-1 or ASTM E 1354, a maximum size of combustion residue whose section is assimilated to a square that can be taken without being broken in said residue obtained that is greater than or equal to 10 mm, preferably greater than or equal to at 30 mm, preferably greater than or equal to 50 mm, from a sample prior to combustion having a square section of 100 mm.
